# EUROPEAN PATENT SPECIFICATION

(11) **EP 3 863 233 B1**
(45) Date of publication and mention of the grant of the patent: **10.07.2024**
(21) Application number: 20206842.5
(22) Date of filing: 24.05.2013
(51) Int. Cl.: H04L 12/46, H04L 12/64

(54) **METHOD AND DEVICE USED FOR ETHERNET VIRTUAL PRIVATE NETWORK**
VERFAHREN UND VORRICHTUNG ZUR VERWENDUNG IN EINEM VIRTUELLEN PRIVATEN ETHERNET-NETZWERK
PROCÉDÉ ET DISPOSITIF UTILISÉS POUR UN RÉSEAU PRIVÉ VIRTUEL ETHERNET

(43) Date of publication of application: 11.08.2021
(62) Divisional of application: 13885138.1
(73) Proprietor: Huawei Technologies Co., Ltd., Longgang District Shenzhen, Guangdong 518129 (CN)
(72) Inventor: ZHANG, Junlin, shenzhen, Guangdong (CN); LI, Zhenbin, shenzhen, Guangdong (CN); ZHUANG, Shunwan, shenzhen, Guangdong (CN)
(74) Representative: Huawei European IPR

(56) References cited:
- US-A1- 2011 286 452
- US-A1- 2012 218 994
- SAJASSI CISCO R AGGARWAL ARKTAN W HENDERICKX F BALUS ALCATEL-LUCENT ALDRIN ISAAC A: "BGP MPLS Based Ethernet VPN; draft-ietf-l2vpn-evpn-03.txt", BGP MPLS BASED ETHERNET VPN; DRAFT-IETF-L2VPN-EVPN-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 February 2013 (2013-02-26), pages 1 - 47, XP015092126
- ALLAN DAVID ET AL: "Ethernet routing for large scale distributed data center fabrics", 2013 IEEE 2ND INTERNATIONAL CONFERENCE ON CLOUD NETWORKING (CLOUDNET), IEEE, 11 November 2013 (2013-11-11), pages 164 - 169, XP032550327, DOI: 10.1109/CLOUDNET.2013.6710571

## Description

### TECHNICAL FIELD

Embodiments of the present invention relate to the field of communications technologies, and more specifically, to a method and a device used for an Ethernet virtual private network.

### BACKGROUND

An Ethernet virtual private network (Virtual Private Network, VPN) allows customer sites (Site) in different areas to be connected across an Internet Protocol (Internet Protocol, IP)/Multiprotocol Label Switching (Multi Protocol Label Switch, MPLS) bearer network, so that these sites can work as on a same local area network (Local Area Net, LAN). On the bearer network, an edge device that connects to a customer site and provides a VPN service is referred to as a provider edge (Provider Edge, PE) device, and a key of an Ethernet VPN technology lies in how the PE device completes Media Access Control (Medium Access Control, MAC) learning and packet forwarding.

According to an existing mechanism, in an Ethernet VPN technology that is based on the Border Gateway Protocol (Border GateWay Protocol, BGP) and MPLS, a local PE device learns MAC of a local site by using a data plane, that is, a local PE obtains MAC reachability information according to a received data packet that is sent by the local site; whereas the local PE device learns MAC of a remote site on a control plane by using BGP signaling. However, the BGP signaling is advertised for each customer MAC (C-MAC) on a same E-VPN, and a route is flooded to all PE devices on the same E-VPN, where customer sites of the same E-VPN work as on a same LAN (also referred to as an Ethernet VPN instance (Ethernet VPN Instance, EVI)). Therefore, when a network size is very large, signaling overheads increase explosively due to a C-MAC route, thereby reducing scalability of a control plane.

US 2012/218 994 A1 describes the method may comprise: allocating a pseudo wire (PW) label and/or an Ethernet (ETH) label through a layer 2 label allocation protocol; and performing data communication according to the allocated PW label and/or the allocated ETH label.

### SUMMARY

Embodiments of the present invention provide a method and a device, as defined by the appended independent claims 1 and 9. The present invention is defined in the attached claims.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic scenario diagram of an Ethernet VPN that may be applied to an embodiment of the present invention;
FIG. 2 is a schematic scenario diagram of another Ethernet VPN that may be applied to an embodiment of the present invention;
FIG. 3 is a flowchart of a method used for an Ethernet virtual private network according to an embodiment of the present invention;
FIG. 4A is a schematic diagram of a data packet encapsulation format according to an embodiment of the present invention;
FIG. 4B is a schematic diagram of a data packet encapsulation format according to another embodiment of the present invention;
FIG. 5 is a flowchart of a method used for an Ethernet virtual private network according to another embodiment of the present invention;
FIG. 6 is a flowchart of a method used for an Ethernet virtual private network according to still another embodiment of the present invention;
FIG. 7 is a schematic structural diagram of a first PE device according to an embodiment of the present invention;
FIG. 8 is a schematic structural diagram of a second PE device according to an embodiment of the present invention;
FIG. 9 is a schematic structural diagram of a label management device according to an embodiment of the present invention;
FIG. 10 is a block diagram of a device according to an embodiment of the present invention;
FIG. 11 is a schematic structural diagram of a first PE device according to another embodiment of the present invention;
FIG. 12 is a schematic structural diagram of a second PE device according to another embodiment of the present invention; and
FIG. 13 is a schematic structural diagram of a label management device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

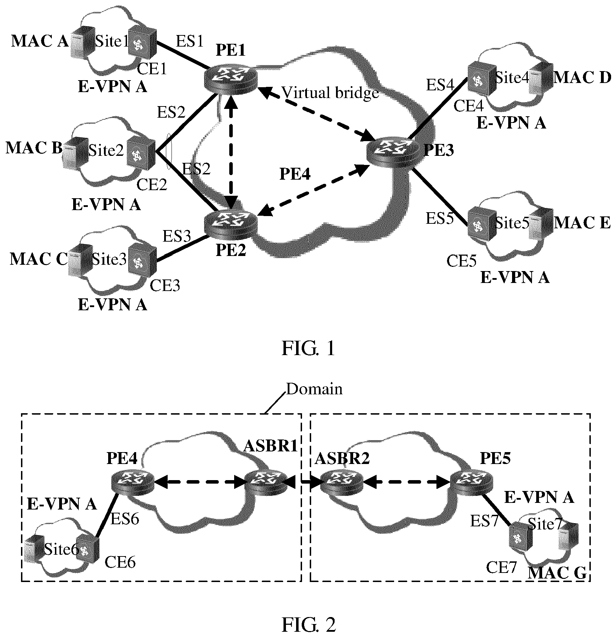

FIG. 1 is a schematic scenario diagram of an Ethernet VPN that may be applied to an embodiment of the present invention. A scenario diagram in FIG. 1 is an intra-domain scenario, which describes three PE devices, which are a PE1, a PE2, and a PE3 respectively, five customer sites, which are a Site (Site) 1, a Site2, a Site3, a Site4, and a Site5 respectively, and corresponding customer edge (Custom Edge, CE) devices, which are a CE1, a CE2, a CE3, a CE4, and a CE5 respectively. One user equipment is described for each CE, and one user equipment corresponds to one unique C-MAC address. The CE1 corresponds to a MAC A, the CE2 corresponds to a MAC B, the CE3 corresponds to a MAC C, the CE4 corresponds to a MAC D, and the CE5 corresponds to a MAC E. The Site1, the Site2, the site3, the Site4, and the Site5 belong to a same Ethernet VPN instance E-VPN A, and are connected across a bearer network to work as on a same LAN. It should be understood that, in one domain, different Ethernet VPN instances may be further included, which is not limited in this embodiment of the present invention.

Single-homing or multihoming links between CEs and PEs are referred to as Ethernet segments (Ethernet Segment, ES). If a CE is connected to one PE in a single-homing manner, a single-homing link between the CE and the PE is referred to as a single-homing ES. If a CE is connected to multiple PEs in a multihoming manner, a group of multihoming links between the CE and the multiple PEs is referred to as a multihoming ES. For a PE device, an ES that is directly connected to the PE device is referred to as a local ES, and an ES that is indirectly connected to the local end is referred to as a remote ES. A non-zero unique identifier of an ES is referred to as an ES identifier (Ethernet Segment Identity, ESI). For all single-homing ESs on a same PE, each ES may correspond to one ESI, or multiple ESs may correspond to one ESI. For a multihoming ES, each ES corresponds to one ESI. An ESI value needs to be unique on an entire network, may be automatically generated, or may be preconfigured. The ESI value may be of 6 bytes or of another length. In a scenario in FIG. 1, an ES between the CE1 and the PE1 is a single-homing ES1, and an ES between the CE2 and the PE1 and PE2 is a multihoming ES2. It should be understood that this embodiment of the present invention constitutes no limitation hereto.

An Ethernet VPN cross-domain scenario may be schematically shown in FIG. 2. For ease of description, two domains are described, each corresponding to one PE device. The corresponding PE devices are a PE4 (corresponding to a customer site Site6) and a PE5 (corresponding to a customer site Site7) respectively, and corresponding CE devices are a CE6 and a CE7 respectively. One user equipment is described for each CE, and one user equipment corresponds to one unique C-MAC address. The CE6 corresponds to a MAC F, and the CE7 corresponds to a MAC G. The Site6 and the Site7 belong to a same Ethernet VPN instance E-VPN A, and are connected across bearer networks in different domains to work as on a same LAN. Information exchange (such as data packet transmission or signaling interaction) between PE devices in different domains needs to be performed by using an ASBR (Autonomous System Border Router, Autonomous System Border Router). For example, the PE4 sends a data packet to the PE5, the data packet needs to be sent to an ASBR1 and is forwarded to an ASBR2 by the ASBR1, and then the ASBR2 sends the data packet to the PE5.

It should be noted that, the scenario diagrams in FIG. 1 and FIG. 2 are merely for ease of description, but are not intended to limit the scope of the present invention. In this embodiment of the present invention, the number of PE devices on a bearer network is not limited, and fewer or more PE devices may be included. In this embodiment of the present invention, the number of customer sites (or CE devices) is not limited either. On an Ethernet VPN bearer network, one PE device may correspond to one or more Ethernet VPN instances, and the number of customer sites (or CE devices) in each Ethernet VPN instance is not limited either, which may be one or more. And so on so forth. It should be further understood that, there may be one or more user equipments (MAC addresses) under each CE, which is not limited in the present invention.

In an existing mechanism, a local PE device learns MAC of a remote site on a control plane by using BGP signaling. For example, in the scenario in FIG. 1, the PE1 learns the MAC E address in such a way that the PE3 sends the BGP signaling to the PE1. However, the BGP signaling is advertised for each C-MAC on a same E-VPN, and a route is flooded to all PE devices on the same E-VPN. In fact, a C-MAC size of each CE device may be very large. Therefore, when a network size is very large, signaling overheads increase explosively due to a C-MAC route, thereby reducing scalability of a control plane.

On the other hand, in a solution for acquiring route information by using a data plane to perform MAC learning, such as an Ethernet VPN technology virtual private local access network service (Virtual Private LAN Service, VPLS) based on a pseudowire (Pseudowire, PW), PE devices are fully connected by using the PW. A PE device performs MAC learning by using the data plane, and a correspondence between a MAC address and the PW is established. One PE device can learn a particular MAC address by using only one PW of one remote PE. For example, in the scenario in FIG. 1, the PE3 can learn the MAC B only from the PW connected to the PE1, or the PE3 can learn the MAC B only from the PW connected to the PE2. Therefore, the PE3 can send a data packet to the MAC B, by using only the PE1 or the PE2, that is, the data packet cannot be distributed by using both the PE1 and the PE2 at the same time. Likewise, a data packet from the MAC B can be sent to the PE3 only by using the PE1 or the PE2. Therefore, in a VPLS technical solution, a requirement for flow-based load sharing in a multihoming scenario cannot be implemented.

To resolve the foregoing problem, embodiments of the present invention provide a method and a device used for an Ethernet virtual private network. A local PE learns a MAC address of a remote site based on an ES, and forwards an Ethernet packet to the remote site by using a learning result and ES route information. High scalability of a control plane is implemented by using a lightweight route while meeting a requirement for flow-based load sharing in some scenarios (such as in a multi-active mode in a multihoming scenario).

For ease of description, the present invention is described with reference to the scenario in FIG. 1, and the present invention may also be applied to a cross-domain scenario or a hierarchical Ethernet VPN networking scenario. It should be understood that, this embodiment of the present invention constitutes no limitation hereto.

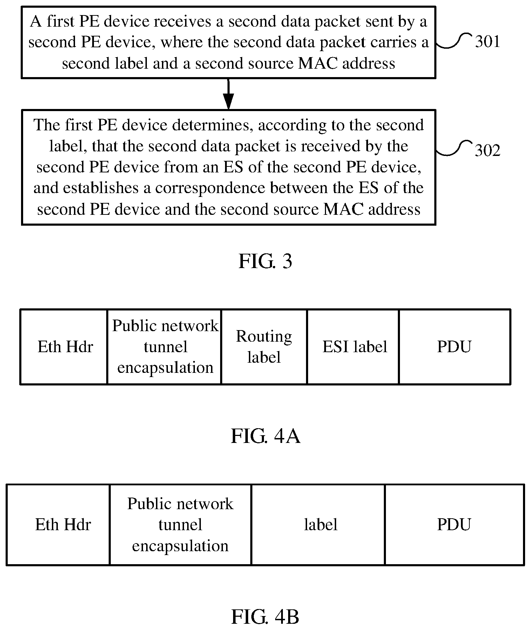

FIG. 3 is a flowchart of a method used for an Ethernet virtual private network according to an example of the present invention. The method in FIG. 3 is performed by PE devices.

301. A first PE device receives a second data packet sent by a second PE device, where the second data packet carries a second label and a second source MAC address.

302. The first PE device determines, according to the second label, that the second data packet is received by the second PE device from an ES of the second PE device, and establishes a correspondence between the ES of the second PE device and the second source MAC address.

In this example of the present invention, a first PE device learns a remote MAC address by using a received second data packet that is sent by a second PE device, that is, a correspondence between an ES of the second PE device and a second source MAC address carried in the second data packet is established. That is, the first PE device learns the remote MAC address by using a data plane, and a correspondence between a remote ES and the remote MAC address is established. Therefore, there is no need to exchange C-MAC information by using a control plane, thereby reducing signaling overheads between PE devices on the control plane, and improving scalability of the control plane.

In addition, when a remote CE is multihomed to remote PEs, multihoming links between the remote CE and the remote PEs are considered by the first PE device as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in some scenarios (such as a multi-active mode in a multihoming scenario) can be implemented.

Specifically, in step 302, there is a correspondence between the second label and the ES of the second PE device, and the first PE device may determine, according to the correspondence between the second label and the ES of the second PE device, that the second data packet is received by the second PE device from the ES of the second PE device.

Optionally, in a possible implementation manner, the second data packet is a known unicast data packet, that is, the second PE device has learned a second destination MAC address carried in the second data packet and established a correspondence between an ES of the first PE device and the second destination MAC address. Therefore, the second PE device may determine that an outbound interface of the second data packet is the ES of the first PE device. The first PE device may forward the second data packet through the ES of the first PE device according to the second label. Further, the second label may include an ES route label of the ES of the first PE device and an Ethernet segment identifier ESI label of the ES of the second PE device (referred to as a "layer-3 label solution"). Optionally, the ES route label of the ES of the first PE device is advertised by the first PE device to the second PE device, and is used to indicate to the first PE device that the second data packet needs to be forwarded through the ES of the first PE device; the ESI label of the ES of the second PE device is used to indicate to the first PE device that the second data packet is received by the second PE device from the ES of the second PE device. Alternatively, the second label is used to indicate to the first PE device that the second data packet is received by the second PE device from the ES of the second PE device and needs to be forwarded through an ES of the first PE device (referred to as a "layer-2 label solution").

In another possible implementation manner, in a case in which the second data packet is a BUM (Broadcast Unknown-unitcast Multicast, a general term for broadcast, unknown unicast, and multicast) data packet, the first PE device may separately forward the second data packet through multiple ESs of the first PE device according to the second label. The second label includes a multicast route label used to indicate that the outbound interfaces are the multiple ESs of the first PE device and the ESI label of the ES of the second PE device (the layer-3 label solution). The ESI label of the ES of the second PE device is used to indicate to the first PE device that the second data packet is received by the second PE device from the ES of the second PE device. Alternatively, the second label is used to indicate to the first PE device that the second data packet is received by the second PE device from an ES of the second PE device and needs to be forwarded through the multiple ESs of the first PE device (the layer-2 label solution).

A specific data packet encapsulation format is schematically shown in FIG. 4A or FIG. 4B, where Eth Hdr represents an Ethernet header and PDU represents an original data packet. FIG. 4A shows a layer-3 label solution, and a route label may be an ES route label of an ES and is used by a PE device to determine a local ES through which the data packet is forwarded. It should be noted that the route label may be a multicast route label, that is, the multicast route label indicates multiple ESs and is used by the PE device to determine local ESs through which the data packet is forwarded. An ESI label is used by the PE device to determine a remote ES through which the data packet is received. FIG. 4B shows a layer-2 label solution, and "label" in an encapsulation format of the layer-2 label solution indicates a correspondence between a local ES of a PE device and a remote ES, and is used by a PE device that receives a data packet to determine a remote ES from which the data packet is received and a local ES (local ESs) through which the data packet needs to be forwarded.

Using the scenario in FIG. 1 as an example, an encapsulation format of a known unicast data packet that is sent by a PE3 and received by a PE1 is a layer-3 label solution, a route label is an ES route label that is of an ES 1 and advertised by the PE1 to the PE3, and an ESI label is an ESI label of an ES4. The PE1 may determine, according to the ES route label of the ES 1, that a data packet is forwarded through the ES1, and may determine, according to the ESI label of the ES4, that the data packet is received from the ES4. For another example, the encapsulation format of the known unicast data packet that is sent by the PE3 and received by the PE1 is a layer-2 label solution, and a label indicates to the PE1 that the data packet is received from the ES4 and needs to be forwarded through the ES1. For still another example, an encapsulation format of a BUM data packet that is sent by the PE3 and received by the PE1 is a layer-3 label solution, a route label is a multicast route label indicating that outbound interfaces are the ES1 and the ES2, and an ESI label is the ESI label of the ES4. The PE1 may determine, according to this multicast route label, that the data packet needs to be separately forwarded through the ES1 and the ES2, and may determine, according to the ESI label of the ES4, that the data packet is received from the ES4. For another example, in a multihoming scenario, the PE3 may receive, separately from the PE1 and the PE2, a data packet (such as a MAC B) that is from a same source MAC address, and a data packet encapsulation format is the layer-3 label solution, a route label is an ES route label that is of the ES4 and advertised by the PE3 to the PE1 and the PE2, an ESI label is an ESI label of the ES2, and the PE3 may determine that the data packet is received from the ES2 and the data packet needs to be forwarded through the ES4.

Optionally, in step 301, when the second data packet received by the first PE device is sent by the second PE device through an Internet Protocol (Internet Protocol, IP) tunnel (such as a GRE tunnel or a UDP tunnel), the second data packet may further carry an IP address of the second PE device. In step 302, the first PE device determines, according to the IP address of the second PE device and the ESI label of the ES of the second PE device, that the second data packet is received by the second PE device from the ES of the second PE device, thereby completing establishment of a correspondence between an ESI of the ES of the second PE device and the second source MAC address.

It should be understood that the foregoing examples are merely exemplary, and are not intended to limit the scope of the present invention.

By using the foregoing solution, a PE device may not only determine a local ES (local ESs) through which the data packet needs to be forwarded, but also may determine a remote ES (remote ESs) from which the data packet is received. By learning a remote MAC address by using a data plane, a correspondence between a remote ES and the remote MAC address is established. When a remote CE is multihomed to PEs, multihoming links between the CE and the PEs are considered as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in a multi-active mode in a multihoming scenario can be implemented, and there is no need to exchange C-MAC information by using a control plane, thereby reducing signaling overheads between PE devices on the control plane, and improving scalability of the control plane.

Optionally, as another embodiment, the first PE device may receive, from the ES of the first PE (for ease of description, in the following examples, a "first ES" is used to represent the ES of the first PE device), a first data packet sent by a CE device, and the first PE device learns a local MAC address according to the first data packet and establishes a correspondence between the first ES (such as a first ES identifier) and a first source MAC address carried in the first data packet.

Further, the first PE device may determine an outbound interface of the first data packet and forward the first data packet.

Optionally, in a case in which the first data packet is a unicast packet and the first PE device has learned a first destination MAC address carried in the first data packet, that is, a correspondence between the first destination MAC address and an outbound interface ES of the first data packet has been established before a PE device forwards the first data packet.

In a possible implementation manner, when the determined outbound interface ES corresponding to the first destination MAC address is an ES among other ESs of the first PE device, in other words, the outbound interface ES corresponding to the first destination MAC address is still a local ES, the first data packet is forwarded through the outbound interface ES corresponding to the first destination MAC address.

Using the scenario in FIG. 1 as an example, the PE1 receives, from the ES1, a unicast data packet sent by the CE1, where the unicast data packet carries a source MAC address MAC A and a destination MAC address MAC B. The PE1 learns a local MAC address, that is, a correspondence between the ES1 and the MAC A is established. When the PE1 has established a correspondence between the ES2 and the MAC B, the PE1 may directly forward the unicast data packet through the ES2.

In another possible implementation manner, when the determined outbound interface ES corresponding to the first destination MAC address is an ES of the second PE device (for ease of description, a second ES is used to represent the ES of the second PE device), the first PE device may encapsulate the first data packet, and send the encapsulated first data packet to the second PE device, where the encapsulated first data packet carries a first label. An encapsulation format of a data packet by the first PE device may be the foregoing third-layer label solution, that is, the first label may include an ES route label of the second ES and an ESI label of the first ES, where the ES route label of the second ES is advertised by the second PE device to the first PE device and used to indicate to the second PE device that the first data packet needs to be forwarded through the second ES; the ESI label of the ES of the first PE device is used to indicate to the second PE device that the first data packet is received from the ES of the first PE device. In this way, the second PE device may forward the first data packet through the second ES according to the ES route label of the second ES, and determine, according to the ESI label of the first ES, that the first data packet is received by the first PE device from the first ES. Alternatively, an encapsulation format of a data packet by the first PE device may also be the layer-2 label solution, that is, the first label is used to indicate to the second PE device that the first data packet is received by the first PE device from the ES of the first PE device and needs to be forwarded through the ES of the second PE device.

Using the scenario in FIG. 1 as an example, the PE1 receives, from the ES1, a unicast data packet sent by the CE1, where the unicast data packet carries a source MAC address MAC A and a destination MAC address MAC D. The PE1 learns a local MAC address, that is, a correspondence between the ES1 and the MAC A is established. When the PE1 has performed remote MAC learning, and established a correspondence between the ES4 and the MAC D, the PE1 may encapsulate the unicast data packet. Using the layer-3 label solution as an example, both an ESI label of the ES 1 and an ES route label that is of the ES4 and advertised by the PE3 to the PE1 are pushed into a label stack, that is, the encapsulated unicast data packet carries the ESI label of the ES 1 and the ES route label that is of the ES4 and advertised by the PE3 to the PE1. Therefore, the encapsulated unicast data packet may be forwarded to the PE3 through a packet public network tunnel (a path between PE devices). In this way, the PE3 may determine, according to the ESI label, that the unicast data packet is received from the ES 1. Optionally, the correspondence between the ES 1 and the MAC A is established, that is, the PE3 performs remote MAC learning, and forwards the unicast data packet through the ES4 according to the route label.

Optionally, in a case in which the first data packet is a broadcast or multicast packet, or in a case in which the first data packet is a unicast packet and a first destination MAC address carried in the first data packet has not been learned before the first PE device forwards the first data packet, this type of data packet is also referred to as a BUM data packet.

When the BUM packet is forwarded in an ingress replication (Ingress Replication) manner, the first PE device may traverse an outbound interface list corresponding to the BUM data packet. For each outbound interface in the outbound interface list, when the outbound interface belongs to the first PE device, the first PE device directly forwards the packet through this outbound interface, and when the outbound interface is a remote ES, the first data packet is encapsulated, where the encapsulated first data packet carries a first label, and is forwarded to the second PE device through a public network tunnel.

Specifically, an encapsulation format of the first data packet by the first PE device may be the foregoing layer-3 label solution, that is, the first label may include an ESI label of the first ES and a multicast route label that is used to indicate that the outbound interfaces are the multiple ESs of the second PE device; or an encapsulation format of the first data packet by the first PE device may also be the layer-2 label solution, that is, the first label is used to indicate that the first data packet is received from the first ES and needs to be separately forwarded through multiple ESs of the second PE device. In this way, the second PE device may separately forward, according to the multicast route label indicating that the outbound interfaces are the multiple ESs of the second PE device, the first data packet through the multiple ESs of the second PE device, and determine, according to the ESI label of the first ES, that the first data packet is received by the first PE device from the first ES. Alternatively, the second PE device may directly determine, according to the first label, that the first data packet is received by the first PE device from the first ES and needs to be separately forwarded through the multiple ESs of the second PE device.

For example, in the scenario in FIG. 1, the PE1 receives, from the ES1, a data packet sent by the CE1. If it is determined that the packet is a BUM data packet and is forwarded in an ingress replication manner, the PE1 may determine, according to an E-VPN A, a VPN to which the ES1 belongs, an outbound interface list corresponding to the BUM data packet, where an ES2, an ES3, an ES4, and an ES5 are included. When a target outbound interface is the ES2, the PE1 may directly forward the BUM data packet through the ES2. When target outbound interfaces are the ES4 and the ES5, the PE1 encapsulates the BUM data packet, and forwards the encapsulated BUM data packet to the PE3 through a packet public network tunnel. Similarly, when a target outbound interface is the ES3, the PE1 encapsulates the BUM data packet, and forwards the encapsulated BUM data packet to the PE2 through a packet public network tunnel. Optionally, for a process of encapsulating the BUM data packet, reference may be made to the foregoing example of forwarding the known unicast packet, and details are not described herein again. After receiving a BUM data packet sent by the PE1, the PE3 may forward this data packet through all local ESs (the ES4 and the ES5) that are of the PE3 and belong to an E-VPNA. After receiving a BUM data packet sent by the PE1, the PE2 may forward this data packet through all local ESs (the ES3) that are of the PE2 and belong to an E-VPNA.

When the BUM data packet is forwarded in a Label Switched Multicast (Label Switch Multicast) manner, for a local outbound interface corresponding to the BUM packet, the first PE device directly forwards the packet through this outbound interface, and if the packet needs to be forwarded to a remote PE, the first PE device does not need to replicate and forward the packet for each remote PE, and the first PE device encapsulates the first data packet, where the encapsulated first data packet carries a first label, and is encapsulated and forwarded to the second PE device through a public network tunnel. The BUM packet can be transmitted, through a public network multicast tunnel, to all remote PE devices that belong to a same VPN.

Specifically, an encapsulation format of the first data packet by the first PE may be the foregoing layer-3 label solution, that is, the first label may include an ESI label of the first ES and a multicast route label that is used to indicate that the outbound interfaces are the multiple ESs of the second PE device; or an encapsulation format of the first data packet by the first PE device may also be the layer-2 label solution, that is, the first label is used to indicate that the first data packet is received by the first PE device from the first ES and needs to be separately forwarded through multiple ESs of the second PE device. In this way, the second PE device may separately forward, according to the multicast route label indicating that the outbound interfaces are the multiple ESs of the second PE device, the first data packet through the multiple ESs of the second PE device, and determine, according to the ESI label of the first ES, that the first data packet is received by the first PE device from the first ES. Alternatively, the second PE device may directly determine, according to the first label, that the first data packet is received by the first PE device from the first ES and needs to be separately forwarded through the multiple ESs of the second PE device.

For example, in the scenario in FIG. 1, the PE3 receives, from the ES4, a data packet sent by the CE4. If it is determined that this packet is a BUM data packet and is forwarded in a Label Switched Multicast (Label Switch Multicast, LSM) manner, the PE3 may determine a local outbound interface of the BUM packet and a remote LSM channel according to an E-VPN A, a VPN to which the ES4 belongs. LSM means that the VPN is carried by using a point-to-multipoint (Point to multiple point, P2MP) tunnel and a multipoint-to-multipoint (Multiple Point to Multiple point, P2MP) tunnel. For a local outbound interface ESS, the PE3 directly forwards the BUM data packet through the ES5. For a situation in which the BUM data packet needs to be forwarded to a remote PE, the PE3 does not need to replicate or forward the packet for each remote PE. If the foregoing layer-2 label encapsulation solution is used, after the data packet is encapsulated by using an LSM manner multicast route label that is allocated by the PE3 to the ES4, the packet is sent to a public network multicast tunnel for encapsulation and forwarding, and after being forwarded through the public network multicast tunnel, the packet reaches the PE1 and the PE2. After receiving the BUM data packet sent by the PE3, the PE1 and the PE2 may identify, according to the multicast route label, that the packet is from a remote ES4. Optionally, the PE1 and the PE2 may separately establish a correspondence between a source MAC address of the packet and the ES4, and separately forward the data packet through a local ES that belongs to the E-VPNA. If the foregoing layer-3 label encapsulation solution is used, the PE3 pushes, into a label stack, the ESI label of the ES4 and the LSM manner multicast route label that is advertised by the PE3, that is, the encapsulated BUM data packet carries the ESI label of the ES4 and the LSM manner multicast route label that is advertised by the PE3 to the PE1 and the PE2. The encapsulated packet is then encapsulated and forwarded through the public network multicast tunnel. After being forwarded through the public network multicast tunnel, the packet reaches the PE1 and the PE2. After receiving the BUM data packet sent by the PE3, the PE1 and the PE2 may identify, according to the ESI label, that the packet is from the remote ES4. Optionally, the PE1 and the PE2 may separately establish a correspondence between a source MAC address of the packet and the ES4, and separately forward the data packet through a local ES that belongs to the E-VPNA.

Optionally, when the first PE device sends the first data packet to the second PE device through an IP tunnel, the foregoing encapsulated first data packet may further carry an IP address of the first PE device. In this way, the second PE device determines, according to the IP address of the first PE device and the ESI label of the ES of the first PE device, that the first data packet is received by the first PE device from the ES of the first PE device, thereby completing establishment of a source MAC address of the first data packet and the ESI of the ES of the first PE device.

By using the foregoing solution, when a PE device sends a data packet to a remote end, a label that is used to encapsulate the data packet can denote from which ES this packet comes, and after receiving the data packet, a remote PE can identify, according to this information, a remote ES from which the data packet is received, thereby completing MAC learning of a remote site and using a learning result to direct subsequent packet forwarding.

Optionally, as another embodiment, before a PE device performs MAC learning by using a data plane, required route information may be exchanged between PE devices. Optionally, if the "layer-3 label solution" is used, the PE device may acquire an ESI label in a local dynamic configuration manner, that is, an ES is first discovered and the ESI label is then allocated and advertised by exchanging control plane information between PEs; alternatively, the PE device may acquire an ESI label in a global static configuration manner, that is, an ESI of each ES of each PE device and a corresponding ESI label are preset on each PE device, and an allocated ESI label can uniquely identify one ESI; alternatively, the PE device may also acquire an ESI label in a global dynamic configuration manner, that is, the ESI label is uniformly allocated by a label management device to an ESI of an ES of each PE device, and the allocated ESI label can uniquely identify one ESI, where the label management device may be a route reflector (Route Reflector), or may be a PE device, or may further be a centralized controller (controller) on a software defined network (Software Defined Network, SDN), or the like.

It should be understood that, in this embodiment of the present invention, a manner in which a PE device obtains route information and ESI label information is not limited.

By using the foregoing solution, the PE device can acquire required encapsulation information when forwarding a packet to a remote site.

Specifically, for the layer-3 label solution and when the local dynamic configuration manner is used to acquire the ESI label, before step 301, the first PE device may receive, by using a control plane, first route information sent by the second PE device, where the first route information includes ES route information or multicast route information, and a route information format defined in an existing technology E-VPN may be used, which is not limited herein.

Further, if the local dynamic configuration manner is used to acquire the ESI label, the first PE device may discover the ES of the second PE device according to an ES identifier carried in the ES route information sent by the second PE device, and allocate an ESI label to the ES identifier of the second PE device. The first PE device sends second ESI label information to the second PE device, where the second ESI label information includes the ES identifier of the second PE device and the ESI label allocated by the first PE device to the ES identifier of the second PE device.

For example, in the scenario in FIG. 1, the PE1 receives ES4 route information sent by the PE3 to the PE1, and in this way the PE1 may discover a remote ES4. The PE1 allocates an ESI label to the remote ES4, constructs an ESI label message that carries an identifier of the remote ES4 and the ESI label allocated to the remote ES4, and advertises the ESI label message to the PE3. Subsequently, when the PE3 receives a packet from the ES4 and needs to send the packet to the PE1, the ESI label allocated by the PE1 to the ES4 may be encapsulated, so as to denote that the packet is from the ES4.

Accordingly, for the layer-3 label solution and when the local dynamic configuration manner is used to acquire the ESI label, the first PE device may further send third route information to the second PE device, where the third route information includes ES route information or multicast route information, and a route information format defined in an existing technology E-VPN may be used, which is not limited herein. Further, when the local dynamic configuration manner is used to acquire the ESI label, the second PE device may discover the ES of the first PE device according to an ES identifier carried in the ES route information sent by the first PE device, and allocate an ESI label to the ES identifier of the first PE device. The second PE device sends first ESI label information to the first PE device, where the first ESI label information includes the ES identifier of the first PE device and the ESI label allocated by the second PE device to the ES identifier of the first PE device. For a specific example, reference may be made to the foregoing description, and details are not described herein again.

For example, in the scenario in FIG. 1, the PE1 advertises ES1 route information to the PE3, and in this way the PE3 may discover a remote ES1. The PE3 allocates an ESI label to the remote ES1, constructs an ESI label message that carries an identifier of the remote ES1 and the ESI label allocated to the remote ES 1, and advertises the ESI label message to the PE1. Subsequently, when the PE1 receives a data packet from the ES1 and needs to send the data packet to the PE3, the ESI label allocated by the PE3 to the ES1 may be encapsulated, so as to denote that the data packet is from the ES 1.

Specially, in a manner in which the local dynamic configuration manner is used to acquire the ESI label, the first PE device may receive third ESI label information sent by the second PE device, where the third ESI label information carries the IP address of the second PE device, the ES identifier of the second PE device, and an ESI label allocated by the second PE device to the ES identifier of the second PE device. Subsequently, when the second PE device receives a second data packet through the ES of the second PE device and needs to send the second data packet to the first PE device through an IP tunnel, the second PE device may encapsulate the ESI label allocated by the second PE device to the ES identifier of the second PE device and the IP address of the second PE device. When the first PE device receives the encapsulated second data packet, the first PE device may determine the ES identifier of the second PE device according to the ESI label allocated by the second PE device to the ES identifier of the second PE device and the IP address of the second PE device, and establish a correspondence between the ES identifier of the second PE device and a source MAC address carried in the second data packet. A definition of a protocol message format for carrying the third ESI label information is not limited in the present invention. An independent protocol message format may be defined, or an existing protocol message format may be directly used or extended.

Accordingly, the first PE device may send fourth ESI label information to the second PE device, where the fourth ESI label information carries the IP address of the first PE device, the ES identifier of the first PE device, and an ESI label allocated by the first PE device to the ES identifier of the first PE device. Likewise, a definition of a protocol message format for carrying the fourth ESI label information is not limited in the present invention. An independent protocol message format may be defined, or an existing protocol message format may be directly used or extended.

Optionally, in a manner in which the global dynamic configuration manner is used to acquire the ESI label, the second PE device may send a second ESI label allocation request message to the label management device, where the second ESI label allocation request message carries the ES identifier of the second PE device. The label management device allocates an ESI label to the ES identifier of the second PE device, and sends corresponding ESI label allocation response messages to the first PE device and the second PE device respectively, where each ESI label allocation response message carries the ESI label allocated by the label management device to the ES identifier of the second PE device. In this way, when the second PE device receives a data packet from an ES and needs to forward the data packet to the first PE device, and the layer-3 label solution is used, an ESI label corresponding to this ES is encapsulated, and the first PE device may determine, according to this ESI label, an ES of the second PE device from which the data packet is received. Optionally, the second ESI label allocation request message and each ESI label allocation response message may further carry an identifier of a VPN to which the ES of the second PE device belongs. In this way, when there are different VPNs on a bearer network, the different VPNs may be distinguished by using identifiers of the different VPNs.

Accordingly, the first PE device may send a first ESI label allocation request message to the label management device, where the first ESI label allocation request message carries the ES identifier of the first PE device. The label management device allocates an ESI label to the ES identifier of the first PE device, sends a first ESI label allocation response message to the first PE device, and sends a second ESI label allocation response message to the second PE device, where both the first ESI label allocation response message and the second ESI label allocation response message carry the ESI label allocated by the label management device to the ES identifier of the first PE device. In this way, when the first PE device receives a data packet from an ES and needs to forward the data packet to the second PE device, and the layer-3 label solution is used, an ESI label corresponding to this ES is encapsulated, and the second PE device may determine, according to this ESI label, an ES of the first PE device from which the data packet is received. Optionally, the first ESI label allocation request message, the first ESI label allocation response message, and the second ESI label allocation response message may further carry an identifier of a VPN to which the ES of the first PE device belongs. In this way, when there are different VPNs on a bearer network, the different VPNs may be distinguished by using identifiers of the different VPNs.

Specifically, for the layer-2 label solution, before step 301, when the first PE device advertises ES route information or Ingress Replication manner multicast route information to the second PE device, a different route label (an ES route label or a multicast route label) is allocated for each ES identifier of the second PE device. Optionally, the first PE device may carry a remote ES identifier, a corresponding local ES identifier, and a corresponding ES route label in the ES route information. Alternatively, the first PE device may carry a remote ES identifier, a multicast domain identifier, and a corresponding multicast route label in the Ingress Replication manner multicast route information. Subsequently, when the second PE device receives a data packet from a local ES and needs to forward the data packet to the first PE device, a route label allocated by the first PE device to an ES that receives the data packet and is of the second PE device may be encapsulated, so as to identify an ES from which the data packet comes and an ES (ESs) through which the data packet needs to be forwarded.

Optionally, before the first PE device allocates the route label to the ES identifier of the second PE device, the first PE device may receive second ES automatic discovery information sent by the second PE device, where the second ES automatic discovery information includes the ES identifier of the second PE device, and may further include an identifier of a VPN to which this ES belongs. The first PE device can discover a remote ES identifier (remote ES identifiers) in the second ES automatic discovery information. Certainly, the ES identifier of the second PE device may be preset on the first PE device. It should be understood that, this embodiment of the present invention constitutes no limitation hereto.

For example, in the scenario in FIG. 1, the PE1 receives ES automatic discovery information sent by the PE3, and discovers two remote ESs, that is, the ES4 and the ES5. The PE1 advertises ES1 route information or Ingress Replication manner multicast route information to the PE3, separately allocates a different route label to the ES4 and the ES5. If ES1 route labels allocated to the ES4 and the ES5 are respectively 1024 and 1025, and Ingress Replication manner multicast route labels allocated to the ES4 and the ES5 are respectively 1124 and 1125. The PE1 notifies information about the allocated route labels by advertising route information to the PE3. Subsequently, if the PE3 receives a packet from the ES4 and the packet is a known unicast packet and needs to be sent to the ES1, a value of an ES route label used to encapsulate the packet is 1024, so as to identify that the packet is from the ES4 and needs to be forwarded through the ES1; if the PE3 receives a packet from the ES5 and the packet is an unknown unicast packet and is sent in an Ingress Replication manner, a value of a multicast route label used to encapsulate the packet is 1125, so as to identify that the packet is from the ES5 and needs to be separately forwarded through all ESs that are of the PE1 and belong to the same VPN (E-VPN A) with the ES5.

Accordingly, when the second PE device advertises ES route information or Ingress Replication manner multicast route information to the first PE device, for each discovered remote ES identifier, a different route label is allocated. Optionally, the second PE device may carry the remote ES identifier, a corresponding local ES identifier, and a corresponding ES route label in the advertised ES route information. Alternatively, the second PE device may carry the remote ES identifier, a multicast domain identifier, and a corresponding multicast route label in the Ingress Replication manner multicast route information. Subsequently, when the first PE device receives a data packet from a local ES and needs to forward the data packet to the second PE device, a route label allocated by the second PE device to an ES that receives the data packet and is of the first PE device may be encapsulated, so as to identify an ES from which the data packet comes and an ES (ESs) through which the data packet needs to be forwarded. Optionally, the first PE device may send first ES automatic discovery information to the second PE device, so that the second PE device may discover a remote ES (remote ESs). Alternatively, the ES identifier of the first PE device may be preset on the second PE device. For a specific implementation manner, reference may be made to the foregoing examples, and details are not described herein again.

For the layer-2 label solution, if an LSM manner is used to send a BUM packet, allocation of a multicast route label does not require discovery of a remote ES in advance. Specifically, before step 301, when the first PE device sends an LSM manner multicast route to the second PE device, a different route label is allocated to each local ES identifier, and the local ES identifier, a multicast domain identifier, and a corresponding multicast route label are carried in route information. Subsequently, when the first PE device receives a data packet from a local ES and determines that the data packet is a BUM packet, and the BUM packet needs to be sent to the second PE device in the LSM manner, the first PE device needs to encapsulate the BUM data packet, where the encapsulated BUM packet carries the multicast route label allocated by the first PE device to the local ES, so as to identify that the BUM data packet is from this local ES and needs to be separately forwarded through multiple ESs (such as multiple ESs that belong to the same VPN with the local ES). Likewise, for an LSM manner multicast route that is sent by the second PE device and received by the first PE device, the second PE device performs similar processing, and details are not described herein again.

For example, in the scenario in FIG. 1, when sending an LSM manner multicast route to the PE1, the PE3 needs to separately allocate a different route label to the local ES4 and ESS, and a local ES identifier, a multicast domain identifier, and a corresponding multicast route label (it is assumed that route labels allocated to the ES4 and the ES5 are respectively 1024 and 1025) are carried in route information. When the PE3 receives a data packet from the ES5 and determines that the data packet is a BUM packet, and the BUM packet is sent in an LSM manner, the PE3 needs to encapsulate the route label 1025 into the data packet, so as to identify that the packet is from the ES5.

By using the foregoing technical solution, PE devices exchange ES route information, multicast route information, and ESI label information are exchanged (corresponding to a layer-3 label solution), or ES automatic discovery information, ES route information, and multicast route information (corresponding to a layer-2 label solution), so that when forwarding a data packet to another PE device, a PE device can acquire encapsulation information required to reach a destination, and can also acquire encapsulation information required to learn about an ES from which the data packet comes. As a result, when receiving a packet from a remote PE device, the PE device can acquire, on a data plane and by using label information encapsulated by the data packet, a remote ES from which the packet comes, and establish an association relationship between a MAC address and the remote ES. Therefore, signaling overheads brought by directly exchanging MAC routes on a control plane between PE devices is reduced, and scalability of the control plane is significantly improved.

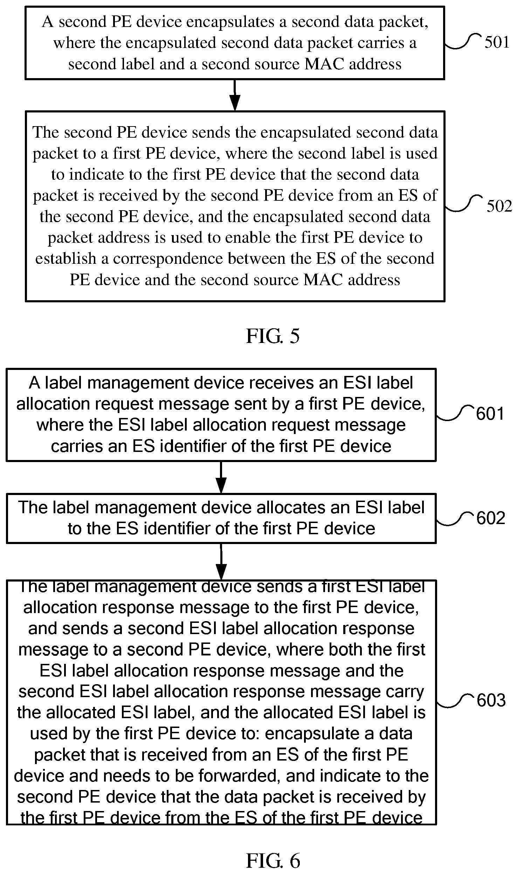

FIG. 5 is a flowchart of a method used for an Ethernet virtual private network according to an example of the present invention. The method in FIG. 5 is performed by a PE device, and is corresponding to the method in FIG. 3. Therefore, the same description as the embodiment of FIG. 3 is appropriately omitted.

501. A second PE device encapsulates a second data packet, where the encapsulated second data packet carries a second label and a second source MAC address.

502. The second PE device sends the encapsulated second data packet to a first PE device, where the second label is used to indicate to the first PE device that the second data packet is received by the second PE device from an ES of the second PE device, and the encapsulated second data packet is used to enable the first PE device to establish a correspondence between the ES of the second PE device and the second source MAC address.

In this example of the present invention, a second PE device encapsulates a second data packet that is to be sent to a first PE device, and the encapsulated second data packet carries a second label and a second source MAC address. The first PE device receives the encapsulated second data packet and performs remote MAC learning, determines, according to the second label, that the second data packet is received by the second PE device from an ES of the second PE device, and establishes a correspondence between the ES of the second PE device and the second source MAC address. That is, the first PE device learns a remote MAC address by using a data plane, that is, a correspondence between a remote ES and the remote MAC address is established. Therefore, there is no need to exchange C-MAC information by using a control plane, thereby reducing signaling overheads between PE devices on the control plane, and improving scalability of the control plane.

In addition, when a remote CE is multihomed to remote PEs, multihoming links between the remote CE and the remote PEs are considered by the first PE device as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in some scenarios (such as a multi-active mode in a multihoming scenario) can be implemented.

Optionally, the second PE device may learn a local MAC address according to the second data packet received from the ES of the second PE device, and establish the correspondence between an ES device of a second PE (such as an ES identifier of the second PE device) and the source MAC address carried in the second data packet.

Optionally, before performing MAC learning by using a data plane, the second PE device may exchange required control information with another PE device, so that the second PE device can acquire required encapsulation information when forwarding a packet to a remote site.

For a specific example, reference may be made to the foregoing description. Details are not described herein again.

FIG. 6 is a flowchart of a method used for an Ethernet virtual private network according to an embodiment of the present invention. The method in FIG. 6 is performed by a PE device, and is corresponding to the method in FIG. 3. Therefore, the same description as the embodiment of FIG. 3 is appropriately omitted.

601. A label management device receives an ESI label allocation request message sent by a first PE device, where the ESI label allocation request message carries an ES identifier of the first PE device.

602. The label management device allocates an ESI label to the ES identifier of the first PE device.

603. The label management device sends a first ESI label allocation response message to the first PE device, and sends a second ESI label allocation response message to a second PE device, where both the first ESI label allocation response message and the second ESI label allocation response message carry the allocated ESI label, and the allocated ESI label is used by the first PE device to: encapsulate a data packet that is received from an ES of the first PE device and needs to be forwarded, and indicate to the second PE device that the data packet is received by the first PE device from the ES of the first PE device.

Optionally, the ESI label allocation request message, the first ESI label allocation response message, and the second ESI label allocation response message may further carry an identifier of a VPN to which the ES of the first PE device belongs.

Optionally, the label management device may be a route reflector, or may be a PE device, or may further be a centralized controller on an SDN network, or the like.

Therefore, if an ESI label of each ES is allocated by using a label management device, and a local PE device receives a data packet from an ES and needs to forward the data packet to a remote PE device, and a layer-3 label solution is used, an ESI label corresponding to this ES may be encapsulated, so as to denote an ES from which the data packet comes, or it may be determined, by using an ESI label that is of a remote ES and in an encapsulated data packet sent by the remote PE device, an ES of the remote PE device from which the data packet is received.

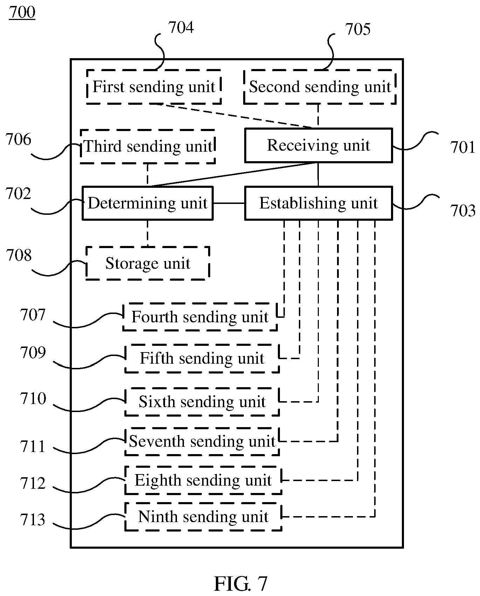

FIG. 7 is a schematic structural diagram of a first PE device according to an embodiment of the present invention. A first PE device 700 in FIG. 7 includes a receiving unit 701, a determining unit 702, and an establishing unit 703.

The receiving unit 701 is configured to receive a second data packet sent by a second PE device, where the second data packet carries a second label and a second source MAC address.

The determining unit 702 is configured to determine, according to the second label received by the receiving unit 701, that the second data packet is received by the second PE device from an ES of the second PE device.

The establishing unit 703 is configured to establish a correspondence between the ES that is of the second PE device and determined by the determining unit 702 and the second source MAC address received by the receiving unit 701.

In this embodiment of the present invention, a first PE device learns a remote MAC address by using a received second data packet that is sent by a second PE device, that is, a correspondence between an ES of the second PE device and a second source MAC address carried in the second data packet is established. That is, the first PE device learns the remote MAC address by using a data plane, and a correspondence between a remote ES and the remote MAC address is established. Therefore, there is no need to exchange C-MAC information by using a control plane, thereby reducing signaling overheads between PE devices on the control plane, and improving scalability of the control plane.

In addition, when a remote CE is multihomed to remote PEs, multihoming links between the remote CE and the remote PEs are considered by the first PE device as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in some scenarios (such as a multi-active mode in a multihoming scenario) can be implemented.

The first PE device 700 may implement steps related to a first PE device in the method in FIG. 3 to FIG. 6. To avoid repetition, details are not described herein again.

Optionally, as an embodiment, in a possible implementation manner, the first PE device 700 may further include a first sending unit 704. The first sending unit 704 is configured to forward the second data packet (which is a known unicast data packet) through an ES of the first PE device according to the second label received by the receiving unit 701. The second label includes an ES route label of the ES of the first PE device and an Ethernet segment identifier ESI label of the ES of the second PE device (referred to as a "layer-3 label solution"). Optionally, the ES route label of the ES of the first PE device is advertised by the first PE device to the second PE device, and is used to indicate to the first PE device that the second data packet needs to be forwarded through an ES of the first PE device; the ESI label of the ES of the second PE device is used to indicate to the first PE device that the second data packet is received by the second PE device from the ES of the second PE device. Alternatively, the second label is used to indicate to the first PE device that the second data packet is received by the second PE device from an ES of the second PE device and needs to be forwarded through an ES of the first PE device (referred to as a "layer-2 label solution").

In another possible implementation manner, the first PE device 700 may further include a second sending unit 705, and the second sending unit 705 is configured to separately forward the second data packet (which is a BUM data packet) through multiple ESs of the first PE device according to the second label received by the receiving unit 701. The second label includes a multicast route label used to indicate that the outbound interfaces are the multiple ESs of the first PE device and an ESI label of the ES of the second PE device (the layer-3 label solution). The ESI label of the ES of the second PE device is used to indicate to the first PE device that the second data packet is received by the second PE device from the ES of the second PE device. Alternatively, the second label is used to indicate to the first PE device that the second data packet is received by the second PE device from an ES of the second PE device and needs to be forwarded through the multiple ESs of the first PE device (the layer-2 label solution).

Optionally, the second data packet is sent by the second PE device through an Internet Protocol IP tunnel, and the second data packet further carries an IP address of the second PE device. The determining unit 702 is specifically configured to determine, according to the IP address of the second PE device and the ESI label of the ES of the second PE device, that the second data packet is received by the second PE device from the ES of the second PE device.

Optionally, as another embodiment, the receiving unit 701 may be further configured to receive, from the ES of the first PE, a first data packet sent by a CE device. The establishing unit 703 may be further configured to learn a local MAC address according to the first data packet received by the receiving unit 701, that is, a correspondence between the ES of the first PE and a first source MAC address carried in the first data packet is established. Further, the determining unit 702 may be further configured to determine an outbound interface of the first data packet received by the receiving unit 701. The first PE device may further include a third sending unit 706, where the third sending unit 706 is configured to forward the first data packet through the outbound interface that is of the first data packet and determined by the determining unit 702.

Still further, in a case in which the first data packet is a unicast packet and the first PE device has learned a first destination MAC address carried in the first data packet, that is, a correspondence between the first destination MAC address carried in the first data packet and the outbound interface of the first data packet has been established before the first data packet is forwarded, the third sending unit 706 is specifically configured to: when the outbound interface that is of the first data packet and determined by the determining unit 702 is an ES among other ESs of the first PE device, forward the first data packet through the outbound interface of the first data packet. Alternatively, the third sending unit 706 is specifically configured to: when the outbound interface that is of the first data packet and determined by the determining unit 702 is an ES of the second PE device, encapsulate the first data packet, and send the encapsulated first data packet to the second PE device, where the encapsulated first data packet carries a first label. The first label is used to indicate to the second PE device that the first data packet is received by the first PE device from the ES of the first PE device and needs to be forwarded through the ES of the second PE device. Optionally, the first label includes an ES route label of the ES of the second PE device and an ESI label of the ES of the first PE device, where the ES route label of the ES of the second PE device is advertised by the second PE device to the first PE device and is used to indicate to the second PE device that the first data packet needs to be forwarded through a second ES; the ESI label of the ES of the first PE device is used to indicate to the second PE device that the first data packet is received by the first PE device from the ES of the first PE device.

Optionally, in a case in which the first data packet is a broadcast or multicast packet, or in a case in which the first data packet is a unicast packet and the first PE device has not learned a first destination MAC address carried in the first data packet before the first data packet is forwarded, that is, a correspondence between the first destination MAC address carried in the first data packet and the outbound interface of the first data packet has not been established, this type of data packet is also referred to as a BUM data packet. Optionally, when the BUM packet is forwarded in an Ingress Replication manner, the determining unit 702 may be further configured to determine at least one target outbound interface that is used to forward the first data packet. The third sending unit 706 is specifically configured to: when the at least one target outbound interface determined by the determining unit 702 is an outbound interface of the first PE device, forward the first data packet through the at least one target outbound interface. Alternatively, the third sending unit 706 is specifically configured to: when the at least one target outbound interface determined by the determining unit 702 is multiple target outbound interfaces, and the multiple target outbound interfaces are outbound interfaces of the second PE device, encapsulate the first data packet, where the encapsulated first data packet carries a first label and is forwarded to the second PE device through a public network tunnel, and the first label is used to indicate to the second PE device that the first data packet is received by the first PE device from the ES of the first PE device and needs to be forwarded through multiple ESs of the second PE device.

Optionally, the first label includes an ESI label of the ES of the first PE device and a second multicast route label that is used to indicate that the outbound interfaces of the first data packet are the multiple ESs of the second PE device, where the second multicast route label is used by the second PE device to determine that the first data packet needs to be forwarded through the multiple ESs of the second PE device, and the ESI label of the ES of the first PE device is used to indicate to the second PE device that the first data packet is received by the first PE device from the ES of the first PE device.

Optionally, the encapsulated first data packet may further carry an IP address of the first PE device, and the IP address of the first PE device and the ESI label of the ES of the first PE device are used to indicate to the second PE device that the first data packet is received by the first PE device from the ES of the first PE device.

Optionally, as another embodiment, the receiving unit 701 may be further configured to receive first route information (including ES route information or multicast route information) sent by the second PE device, where the first route information carries an ES identifier of the second PE device. Further, the establishing unit 703 may be further configured to allocate an ESI label to the ES identifier that is of the second PE device and received by the receiving unit 701. The first PE device further includes a fourth sending unit 707, where the fourth sending unit 707 is configured to send second ESI label information to the second PE device, where the second ESI label information includes the ES identifier of the second PE device and the ESI label allocated by the establishing unit 703 to the ES identifier of the second PE device. The first PE device may further receive multicast route information sent by the second PE device. Reference may be made to the foregoing description, and details are not described herein again.

Optionally, as another embodiment, the receiving unit 701 may be further configured to receive third ESI label information sent by the second PE device, where the third ESI label information carries the IP address of the second PE device, the ES identifier of the second PE device, and an ESI label allocated by the second PE device to the ES identifier of the second PE device. A definition of a protocol message format for carrying the third ESI label information is not limited in the present invention. An independent protocol message format may be defined, or an existing protocol message format may be directly used or extended.

Optionally, as another embodiment, the receiving unit 701 may be further configured to receive second ES automatic discovery information sent by the second PE device, where the second ES automatic discovery information includes the ES identifier of the second PE device. Certainly, the ES identifier of the second PE device may be preset on the first PE device. It should be understood that, this embodiment of the present invention constitutes no limitation hereto. The establishing unit 702 may be further configured to allocate a route label to the ES identifier that is of the second PE device and received by the receiving unit 701. The first PE device further includes a fifth sending unit 709, where the fifth sending unit 709 is configured to send, to the second PE device, route information that includes the ES identifier of the second PE device and the route label allocated by the establishing unit 703 to the ES identifier of the second PE device.

Optionally, as another embodiment, the first PE device further includes a sixth sending unit 710, where the sixth sending unit 710 is configured to send third route information (including ES route information or multicast route information) to the second PE device, where the third route information carries an ES identifier of the first PE device. The receiving unit 701 may be further configured to receive first ESI label information sent by the second PE device, where the first ESI label information includes the ES identifier of the first PE device and an ESI label allocated by the second PE device to the ES identifier of the first PE device. The first PE device may further send multicast route information to the second PE device. Reference may be made to the foregoing description, and details are not described herein again.

Optionally, the first PE device 700 device may further include an eighth sending unit 712, where the eighth sending unit 712 is configured to send first ES automatic discovery information to the second PE device, where the first ES automatic discovery information includes the ES identifier of the first PE device and an identifier of a VPN to which the ES of the first PE device belongs, and the first ES automatic discovery information is used to instruct the second PE device to allocate an ES route label to the ES identifier of the first PE device.

Optionally, the first PE device 700 may further include a storage unit 708, where the storage unit 708 is configured to store a preset ESI of each ES that is of each PE device and a preset corresponding ESI label, and an allocated ESI label can uniquely identify one ESI. Alternatively, the ESI label may also be acquired in a global dynamic configuration manner, that is, the ESI label is uniformly allocated by a label management device to an ESI of an ES of each PE device, and the allocated ESI label can uniquely identify one ESI. The label management device may be a route reflector, or may be a PE device, or may further be a centralized controller on an SDN, or the like. It should be understood that, a manner in which a PE device obtains route information and ESI label information is not limited in this embodiment of the present invention.

Specifically, the second PE device may send a second ESI label allocation request message to the label management device, where the second ESI label allocation request message carries the ES identifier of the second PE device. The label management device allocates an ESI label to the ES identifier of the second PE device, and sends a second ESI label allocation response message to the first PE device. The receiving unit 701 may be further configured to receive the second ESI label allocation response message sent by the label management device, where the second ESI label allocation response message carries the ESI label allocated by the label management device to the ES identifier of the second PE device. In this way, the second PE device encapsulates, according to this ESI label, a data packet that needs to be forwarded, and the first PE device may determine, according to this ESI label, an ES of the second PE device from which the data packet is received. Optionally, the second ESI label allocation request message and the second ESI label allocation response message may further carry an identifier of a VPN to which the ES of the second PE device belongs. In this way, when there are different VPNs on a bearer network, the different VPNs may be distinguished by using identifiers of the different VPNs.

Optionally, the first PE device 700 further includes a ninth sending unit 713, where the ninth sending unit 713 is configured to send fourth ESI label information to the second PE device, where the fourth ESI label information carries the IP address of the first PE device, the ES identifier of the first PE device, and an ESI label allocated by the first PE device to the ES identifier of the first PE device. Likewise, a definition of a protocol message format for carrying the fourth ESI label information is not limited in the present invention. An independent protocol message format may be defined, or an existing protocol message format may be directly used or extended.

Optionally, the first PE device further includes a seventh sending unit 711, where the seventh sending unit 711 is configured to send a first ESI label allocation request message to the label management device, where the first ESI label allocation request message carries the ES identifier of the first PE device. The receiving unit 701 may be further configured to receive a first ESI label allocation response message sent by the label management device, where the first ESI label allocation response message carries an ESI label allocated by the label management device to the ES identifier of the first PE device. In this way, the first PE device encapsulates, according to this ESI label, a data packet that needs to be forwarded, and the second PE device may determine, according to this ESI label, an ES of the first PE device from which the data packet is received. Optionally, the first ESI label allocation request message and the first ESI label allocation response message may further carry an identifier of a VPN to which the ES of the first PE device belongs. In this way, when there are different VPNs on a bearer network, the different VPNs may be distinguished by using identifiers of the different VPNs.

By using the foregoing technical solution, ES route information, multicast route information, and ESI label information are exchanged between PE devices (corresponding to a layer-3 label solution), or ES automatic discovery information, ES route information, and multicast route information are exchanged (corresponding to a layer-2 label solution), so that when forwarding a data packet to another PE device, a PE device can acquire encapsulation information required to reach a destination, and can also acquire encapsulation information required to learn about an ES from which the data packet comes. As a result, when receiving a packet from a remote PE device, the PE device can acquire, on a data plane and by using label information encapsulated by the data packet, a remote ES from which the packet comes, and establish an association relationship between a MAC address and the remote ES. Therefore, signaling overheads brought by directly exchanging MAC routes on a control plane between PE devices is reduced, and scalability of the control plane is significantly improved.

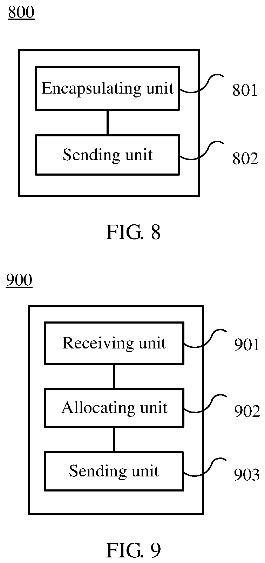

FIG. 8 is a schematic structural diagram of a second PE device according to an embodiment of the present invention. A second PE device 800 in FIG. 8 includes an encapsulating unit 801 and a sending unit 802.

The encapsulating unit 801 is configured to encapsulate a second data packet, where the encapsulated second data packet carries a second label and a second source MAC address.

The sending unit 802 is configured to send, to a first PE device, the second data packet encapsulated by the encapsulating unit 801, and the second label is used to indicate to the first PE device that the second data packet is received by the second PE device from an ES of the second PE device, and the encapsulated second data packet is used to enable the first PE device to establish a correspondence between the ES of the second PE device and the second source MAC address.

In this embodiment of the present invention, a second PE device encapsulates a second data packet that is to be sent to a first PE device, and the encapsulated second data packet carries a second label and a second source MAC address. The first PE device receives the encapsulated second data packet and performs remote MAC learning, determines, according to the second label, that the second data packet is received by the second PE device from an ES of the second PE device, and establishes a correspondence between the ES of the second PE device and the second source MAC address. That is, the first PE device learns a remote MAC address by using a data plane, that is, a correspondence between a remote ES and the remote MAC address is established. Therefore, there is no need to exchange C-MAC information by using a control plane, thereby reducing signaling overheads between PE devices on the control plane, and improving scalability of the control plane.

In addition, when a remote CE is multihomed to remote PEs, multihoming links between the remote CE and the remote PEs are considered by the first PE device as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in some scenarios (such as a multi-active mode in a multihoming scenario) can be implemented.

The second PE device 800 may implement steps related to a second PE device in the method in FIG. 3 to FIG. 6. To avoid repetition, details are not described herein again.

It should be understood that, the second PE device 800 may further have a function of a first PE device. For a specific implementation manner, reference may be made to the foregoing description, and details are not described herein again.

FIG. 9 is a schematic structural diagram of a label management device according to an embodiment of the present invention. A label management device 900 in FIG. 9 includes a receiving unit 901, an allocating unit 902, and a sending unit 903.

The receiving unit 901 is configured to receive an ESI label allocation request message sent by a first PE device, where the ESI label allocation request message carries an ES identifier of the first PE device.

The allocating unit 902 is configured to allocate an ESI label to the ES identifier that is of the first PE device and received by the receiving unit 901.

The sending unit 903 is configured to send a first ESI label allocation response message to the first PE device, and send a second ESI label allocation response message to a second PE device, where both the first ESI label allocation response message and the second ESI label allocation response message carry the ESI label allocated by the allocating unit 902, and the allocated ESI label is used by the first PE device to: encapsulate a data packet that needs to be forwarded, and indicate to the second PE device that the data packet is received by the first PE device from an ES of the first PE device.

The label management device 900 may implement steps related to a label management device in the method in FIG. 3 to FIG. 6. To avoid repetition, details are not described herein again.

Optionally, the ESI label allocation request message, the first ESI label allocation response message, and the second ESI label allocation response message may further carry an identifier of a VPN to which the ES of the first PE device belongs.

Optionally, the label management device may be a route reflector, or may be a PE device, or may further be a centralized controller on an SDN network, or the like.

Therefore, if an ESI label of each ES is allocated by using a label management device, and a local PE device receives a data packet from an ES and needs to forward the data packet to a remote PE device, and a layer-3 label solution is used, an ESI label corresponding to this ES may be encapsulated, so as to denote an ES from which the data packet comes, or it may be determined, by using an ESI label that is of a remote ES and in an encapsulated data packet sent by the remote PE device, an ES of the remote PE device from which the data packet is received.

For a specific implementation manner, reference may be made to the foregoing description, and details are not described herein again.

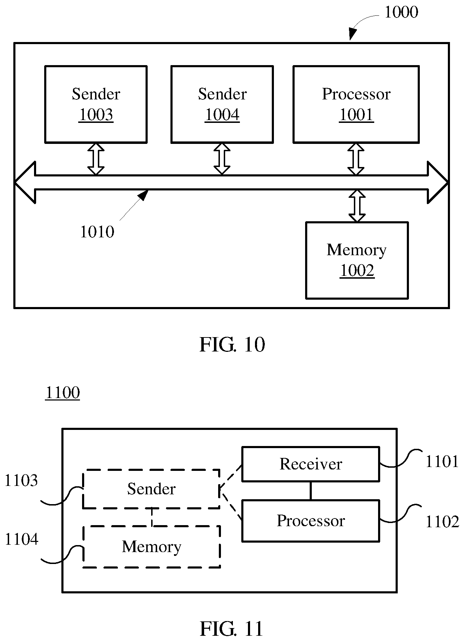

This embodiment of the present invention further provides an apparatus embodiment that implements steps and methods in the foregoing method embodiments. FIG. 10 shows an embodiment of a device. In this embodiment, a device 1000 includes a processor 1001, a memory 1002, a sender 1003, and a receiver 1004. The processor 1001 controls an operation of the device 1000, and the processor 1001 may further be referred to as a CPU (Central Processing Unit, central processing unit). The memory 1002 may include a read-only memory and a random access memory, and provides an instruction and data to the processor 1001. A part of the memory 1002 may further include a nonvolatile random access memory (NVRAM). The processor 1001, the memory 1002, the sender 1003, and the receiver 1004 are coupled together by using a bus system 1010, where the bus system 1010 further includes a power bus, a control bus, and a status signal bus, in addition to a data bus. However, for clarity of description, all types of buses in the figure are marked as the bus system 1010.

The methods disclosed in the foregoing embodiments of the present invention may be applied to the foregoing device 1000. The processor 1001 may be an integrated circuit chip, and has a signal processing capability. In an implementation process, steps in the foregoing methods may be completed by using an integrated logic circuit of hardware in the processor 1001 or a software instruction.

Further, FIG. 11 is a schematic structural diagram of a first PE device according to another embodiment of the present invention. A first PE device 1100 in FIG. 11 includes a receiver 1101 and a processor 1102.

The receiver 1101 is configured to receive a second data packet sent by a second PE device, where the second data packet carries a second label and a second source MAC address.

The processor 1102 is configured to: determine, according to the second label received by the receiver 1101, that the second data packet is received by the second PE device from an ES of the second PE device; and establish a correspondence between the determined ES of the second PE device and the second source MAC address received by the receiver 1101.

In this embodiment of the present invention, a first PE device learns a remote MAC address by using a received second data packet that is sent by a second PE device, that is, a correspondence between an ES of the second PE device and a second source MAC address carried in the second data packet is established. That is, the first PE device learns the remote MAC address by using a data plane, and a correspondence between a remote ES and the remote MAC address is established. Therefore, there is no need to exchange C-MAC information by using a control plane, thereby reducing signaling overheads between PE devices on the control plane, and improving scalability of the control plane.

In addition, when a remote CE is multihomed to remote PEs, multihoming links between the remote CE and the remote PEs are considered by the first PE device as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in some scenarios (such as a multi-active mode in a multihoming scenario) can be implemented.

The first PE device 1100 may implement steps related to a first PE device in the method in FIG. 3 to FIG. 6. To avoid repetition, details are not described herein again.

Optionally, as an embodiment, in a possible implementation manner, the first PE device 1100 may further include a sender 1103. The sender 1103 is configured to forward the second data packet (which is a known unicast data packet) through an ES of the first PE device according to the second label received by the receiver 1101. The second label includes an ES route label of the ES of the first PE device and an Ethernet segment identifier ESI label of the ES of the second PE device (referred to as a "layer-3 label solution"). Optionally, the ES route label of the ES of the first PE device is advertised by the first PE device to the second PE device, and is used to indicate to the first PE device that the second data packet needs to be forwarded through an ES of the first PE device; the ESI label of the ES of the second PE device is used to indicate to the first PE device that the second data packet is received by the second PE device from the ES of the second PE device. Alternatively, the second label is used to indicate to the first PE device that the second data packet is received by the second PE device from an ES of the second PE device and needs to be forwarded through an ES of the first PE device (referred to as a "layer-2 label solution").

In another possible implementation manner, the sender 1103 may be further configured to separately forward the second data packet (which is a BUM data packet) through multiple ESs of the first PE device according to the second label received by the receiver 1101. The second label includes a multicast route label used to indicate that the outbound interfaces are the multiple ESs of the first PE device and an ESI label of the ES of the second PE device (the layer-3 label solution). The ESI label of the ES of the second PE device is used to indicate to the first PE device that the second data packet is received by the second PE device from the ES of the second PE device. Alternatively, the second label is used to indicate to the first PE device that the second data packet is received by the second PE device from an ES of the second PE device and needs to be forwarded through the multiple ESs of the first PE device (the layer-2 label solution).

Optionally, the second data packet is sent by the second PE device through an Internet Protocol IP tunnel, and the second data packet further carries an IP address of the second PE device. The processor 1102 is specifically configured to determine, according to the IP address of the second PE device and the ESI label of the ES of the second PE device, that the second data packet is received by the second PE device from the ES of the second PE device.

Optionally, as another embodiment, the receiver 1101 may be further configured to receive, from the ES of the first PE, a first data packet sent by a CE device. The processor 1102 may be further configured to learn a local MAC address according to the first data packet received by the receiver 1101, that is, a correspondence between the ES of the first PE and a first source MAC address carried in the first data packet is established. Further, the processor 1102 is specifically configured to determine an outbound interface of the first data packet received by the receiver 1101. The sender 1103 may be further configured to forward the first data packet through the outbound interface that is of the first data packet and determined by the processor 1102.

Still further, in a case in which the first data packet is a unicast packet and the first PE device has learned a first destination MAC address carried in the first data packet, that is, a correspondence between the first destination MAC address carried in the first data packet and the outbound interface of the first data packet has been established before the first data packet is forwarded, the sender 1103 is specifically configured to: when the outbound interface that is of the first data packet and determined by the processor 1102 is an ES among other ESs of the first PE device, forward the first data packet through the outbound interface of the first data packet. Alternatively, the sender 1103 is specifically configured to: when the outbound interface that is of the first data packet and determined by the processor 1102 is an ES of the second PE device, encapsulate the first data packet, and send the encapsulated first data packet to the second PE device, where the encapsulated first data packet carries a first label. The first label is used to indicate to the second PE device that the first data packet is received by the first PE device from the ES of the first PE device and needs to be forwarded through the ES of the second PE device. Optionally, the first label includes an ES route label of the ES of the second PE device and an ESI label of the ES of the first PE device, where the ES route label of the ES of the second PE device is advertised by the second PE device to the first PE device and is used to indicate to the second PE device that the first data packet needs to be forwarded through a second ES; the ESI label of the ES of the first PE device is used to indicate to the second PE device that the first data packet is received by the first PE device from the ES of the first PE device.

Optionally, in a case in which the first data packet is a broadcast or multicast packet, or in a case in which the first data packet is a unicast packet and the first PE device has not learned a first destination MAC address carried in the first data packet before the first data packet is forwarded, that is, a correspondence between the first destination MAC address carried in the first data packet and the outbound interface of the first data packet has not been established, this type of data packet is also referred to as a BUM data packet. Optionally, when the BUM packet is forwarded in an Ingress Replication manner, the processor 1102 may be further configured to determine at least one target outbound interface that is used to forward the first data packet. The sender 1103 is specifically configured to: when the at least one target outbound interface determined by the processor 1102 is an outbound interface of the first PE device, forward the first data packet through the at least one target outbound interface. Alternatively, the sender 1103 is specifically configured to: when the at least one target outbound interface determined by the processor 1102 is multiple target outbound interfaces, and the multiple target outbound interfaces are outbound interfaces of the second PE device, encapsulate the first data packet, where the encapsulated first data packet carries a first label and is forwarded to the second PE device through a public network tunnel, and the first label is used to indicate to the second PE device that the first data packet is received by the first PE device from the ES of the first PE device and needs to be forwarded through multiple ESs of the second PE device.

Optionally, the first label includes an ESI label of the ES of the first PE device and a second multicast route label that is used to indicate that the outbound interfaces of the first data packet are the multiple ESs of the second PE device, where the second multicast route label is used by the second PE device to determine that the first data packet needs to be forwarded through the multiple ESs of the second PE device, and the ESI label of the ES of the first PE device is used to indicate to the second PE device that the first data packet is received by the first PE device from the ES of the first PE device.

Optionally, the encapsulated first data packet may further carry an IP address of the first PE device, and the IP address of the first PE device and the ESI label of the ES of the first PE device are used to indicate to the second PE device that the first data packet is received by the first PE device from the ES of the first PE device.

Optionally, as another embodiment, the receiver 1101 may be further configured to receive first route information (including ES route information or multicast route information) sent by the second PE device, where the first route information carries an ES identifier of the second PE device. Further, the processor 1102 may be further configured to allocate an ESI label to the ES identifier that is of the second PE device and received by the receiver 1101. The sender 1103 may be further configured to send second ESI label information to the second PE device, where the second ESI label information includes the ES identifier of the second PE device and the ESI label allocated by the processor 1102 to the ES identifier of the second PE device. The first PE device may further receive multicast route information sent by the second PE device. Reference may be made to the foregoing description, and details are not described herein again.

Optionally, as another embodiment, the receiver 1101 may be further configured to receive third ESI label information sent by the second PE device, where the third ESI label information carries the IP address of the second PE device, the ES identifier of the second PE device, and an ESI label allocated by the second PE device to the ES identifier of the second PE device. A definition of a protocol message format for carrying the third ESI label information is not limited in the present invention. An independent protocol message format may be defined, or an existing protocol message format may be directly used or extended.

Optionally, as another embodiment, the receiver 1101 may be further configured to receive second ES automatic discovery information sent by the second PE device, where the second ES automatic discovery information includes the ES identifier of the second PE device. Certainly, the ES identifier of the second PE device may be preset on the first PE device. It should be understood that, this embodiment of the present invention constitutes no limitation hereto. The processor 1102 may be further configured to allocate a route label to the ES identifier that is of the second PE device and received by the receiver 1101. The sender 1103 may be further configured to send route information that includes the ES identifier of the second PE device and the route label allocated by the processor 1102 to the ES identifier of the second PE device.

Optionally, as another embodiment, the sender 1103 may be further configured to send third route information (including ES route information or multicast route information) to the second PE device, where the third route information carries an ES identifier of the first PE device. The receiver 1101 may be further configured to receive first ESI label information sent by the second PE device, where the first ESI label information includes the ES identifier that is of the first PE device and sent by the sender 1103 and an ESI label allocated by the second PE device to the ES identifier of the first PE device. The first PE device may further send multicast route information to the second PE device. Reference may be made to the foregoing description, and details are not described herein again.

Optionally, the sender 1103 may be further configured to send first ES automatic discovery information to the second PE device, where the first ES automatic discovery information includes the ES identifier of the first PE device and an identifier of a VPN to which the ES of the first PE device belongs, and the first ES automatic discovery information is used to instruct the second PE device to allocate an ES route label to the ES identifier of the first PE device.

Optionally, the first PE device 1100 may further include a memory 1104, where the memory 1104 is configured to store a preset ESI of each ES that is of each PE device and a preset corresponding ESI label, and an allocated ESI label can uniquely identify one ESI. Alternatively, the ESI label may also be acquired in a global dynamic configuration manner, that is, the ESI label is uniformly allocated by a label management device to an ESI of an ES of each PE device, and the allocated ESI label can uniquely identify one ESI. The label management device may be a route reflector, or may be a PE device, or may further be a centralized controller on an SDN, or the like. It should be understood that, a manner in which a PE device obtains route information and ESI label information is not limited in this embodiment of the present invention.

Specifically, the second PE device may send a second ESI label allocation request message to the label management device, where the second ESI label allocation request message carries the ES identifier of the second PE device. The label management device allocates an ESI label to the ES identifier of the second PE device, and sends a second ESI label allocation response message to the first PE device and the second PE device. The receiver 1101 may be further configured to receive the second ESI label allocation response message sent by the label management device, where the second ESI label allocation response message carries the ESI label allocated by the label management device to the ES identifier of the second PE device. In this way, the second PE device encapsulates, according to this ESI label, a data packet that needs to be forwarded, and the first PE device may determine, according to this ESI label, an ES of the second PE device from which the data packet is received. Optionally, the second ESI label allocation request message and the second ESI label allocation response message may further carry an identifier of a VPN to which the ES of the second PE device belongs. In this way, when there are different VPNs on a bearer network, the different VPNs may be distinguished by using identifiers of the different VPNs.

Optionally, the sender 1103 may be further configured to send fourth ESI label information to the second PE device, where the fourth ESI label information carries the IP address of the first PE device, the ES identifier of the first PE device, and an ESI label allocated by the first PE device to the ES identifier of the first PE device. Likewise, a definition of a protocol message format for carrying the fourth ESI label information is not limited in the present invention. An independent protocol message format may be defined, or an existing protocol message format may be directly used or extended.

Specifically, the sender 1103 may be further configured to send a first ESI label allocation request message to the label management device, where the first ESI label allocation request message carries the ES identifier of the first PE device. The receiver 1101 may be further configured to receive a first ESI label allocation response message sent by the label management device, where the first ESI label allocation response message carries an ESI label allocated by the label management device to the ES identifier of the first PE device. In this way, the first PE device encapsulates, according to this ESI label, a data packet that needs to be forwarded, and the second PE device may determine, according to this ESI label, an ES of the first PE device from which the data packet is received. Optionally, the first ESI label allocation request message and the first ESI label allocation response message may further carry an identifier of a VPN to which the ES of the first PE device belongs. In this way, when there are different VPNs on a bearer network, the different VPNs may be distinguished by using identifiers of the different VPNs.

By using the foregoing technical solution, ES route information, multicast route information, and ESI label information are exchanged between PE devices (corresponding to a layer-3 label solution), or ES automatic discovery information, ES route information, and multicast route information are exchanged (corresponding to a layer-2 label solution), so that when forwarding a data packet to another PE device, a PE device can acquire encapsulation information required to reach a destination, and can also acquire encapsulation information required to learn about an ES from which the data packet comes. As a result, when receiving a packet from a remote PE device, the PE device can acquire, on a data plane and by using label information encapsulated by the data packet, a remote ES from which the packet comes, and establish an association relationship between a MAC address and the remote ES. Therefore, signaling overheads brought by directly exchanging MAC routes on a control plane between PE devices is reduced, and scalability of the control plane is significantly improved.

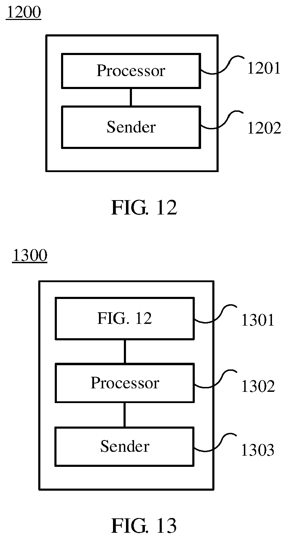

FIG. 12 is a schematic structural diagram of a second PE device according to another embodiment of the present invention. A second PE device 1200 in FIG. 12 includes a processor 1201 and a sender 1202.

The processor 1201 is configured to encapsulate a second data packet, where the encapsulated second data packet carries a second label and a second source MAC address.

The sender 1202 is configured to send, to a first PE device, the second data packet encapsulated by the processor 1201, and the second label is used to indicate to the first PE device that the second data packet is received by the second PE device from an ES of the second PE device, and the second source MAC address is used by the first PE device to establish a correspondence between the ES of the second PE device and the second source MAC address.

In this embodiment of the present invention, a second PE device encapsulates a second data packet that is to be sent to a first PE device, and the encapsulated second data packet carries a second label and a second source MAC address. The first PE device receives the encapsulated second data packet and performs remote MAC learning, determines, according to the second label, that the second data packet is received by the second PE device from an ES of the second PE device, and establishes a correspondence between the ES of the second PE device and the second source MAC address. That is, the first PE device learns a remote MAC address by using a data plane, that is, a correspondence between a remote ES and the remote MAC address is established. Therefore, there is no need to exchange C-MAC information by using a control plane, thereby reducing signaling overheads between PE devices on the control plane, and improving scalability of the control plane.

In addition, when a remote CE is multihomed to remote PEs, multihoming links between the remote CE and the remote PEs are considered by the first PE device as a same remote ES. In this case, by using an ES route delivered on a control plane, a local PE device may reach a remote ES by using multiple different remote PEs. Likewise, the remote CE may reach the local PE device by using different multihomed PEs. In this way, flow-based load sharing in some scenarios (such as a multi-active mode in a multihoming scenario) can be implemented.

The second PE device 1200 may implement steps related to a second PE device in the method in FIG. 3 to FIG. 6. To avoid repetition, details are not described herein again.

It should be understood that, the second PE device 1200 may further have a function of a first PE device. For a specific implementation manner, reference may be made to the foregoing description, and details are not described herein again.

FIG. 13 is a schematic structural diagram of a label management device according to an embodiment of the present invention. A label management device 1300 in FIG. 13 includes a receiver 1301, a processor 1302, and a sender 1303.

The receiver 1301 is configured to receive an ESI label allocation request message sent by a first PE device, where the ESI label allocation request message carries an ES identifier of the first PE device.

The processor 1302 is further configured to allocate an ESI label to the ES identifier that is of the first PE device and received by the receiver 1301.

The sender 1303 is configured to send a first ESI label allocation response message to the first PE device, and send a second ESI label allocation response message to the second PE device, where both the first ESI label allocation response message and the second ESI label allocation response message carry the allocated ESI label, and the allocated ESI label is used by the first PE device to: encapsulate a data packet that needs to be forwarded, and indicate to the second PE device that the data packet is received by the first PE device from an ES of the first PE device.

The label management device 1300 may implement steps related to a label management device in the method in FIG. 3 to FIG. 6. To avoid repetition, details are not described herein again.

Optionally, the ESI label allocation request message, the first ESI label allocation response message, and the second ESI label allocation response message may further carry an identifier of a VPN to which the ES of the first PE device belongs.

Optionally, the label management device may be a route reflector, or may be a PE device, or may further be a centralized controller on an SDN network, or the like.

Therefore, if an ESI label is allocated to each ES by using a label management device, and a local PE device receives a data packet from an ES and needs to forward the data packet to a remote PE device, and a layer-3 label solution is used, an ESI label corresponding to this ES may be encapsulated, so as to denote an ES from which the data packet comes, or it may be determined, by using an ESI label that is of a remote ES and in an encapsulated data packet sent by the remote PE device, an ES of the remote PE device from which the data packet is received.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for ease and brevity of description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the purposes of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Therefore, the protection scope of the present invention shall be subject to the protection scope of the claims.

## Claims

1. A method used for a communication network, comprising:
allocating (602), by a label management device, a first Ethernet segment identifier, ESI, label to a first Ethernet segment, ES, of a first provider edge, PE, device, wherein the first ESI label is used to uniquely identify a first ESI, the first ESI is used to identify the first ES, the first ES comprises a first link between the first PE and a first customer edge, CE; and
sending (603), by the label management device, a first ESI label allocation message to the first PE device, wherein the first ESI label allocation message carries the first ESI label.

2. The method according to claim 1, wherein the method further comprises:
sending, by the label management device, a second ESI label allocation message to the first ES of a second PE device, wherein the second ESI label allocation message carries the first ESI label, the first ES further comprises a second link between the second PE and the first CE.

3. The method according to claim 1 or 2, wherein the first ESI label is used by the first PE device to: encapsulate a data packet that is received from the first link and needs to be forwarded, and indicate to the second PE device that the data packet is received by the first link.

4. The method according to any one of claims 1 to 3, wherein before the allocating, by a label management device, a first Ethernet segment identifier, ESI, label to a first Ethernet segment, ES, of a first provider edge, PE, device, the method further comprises:
receiving, by the label management device, an ESI label allocation request message sent by the first PE device, wherein the ESI label allocation request message carries the ESI of the first PE device.

5. The method according to claim 4, wherein the ESI label allocation request message further carries an identifier of an Ethernet virtual private network, EVPN, to which the first ES belongs, the first ESI label allocation response message further carries an identifier of the EVPN to which the first ES belongs, and the second ESI label allocation message further carries the identifier of the EVPN to which the first ES belongs.

6. The method according to any one of claims 1 to 5, wherein the label management device is a route reflector or a PE device or a centralized controller.

7. The method according to any one of claims 1 to 6, wherein the communication network is an Ethernet virtual private network.

8. The method according to any one of claims 1 to 7, wherein the communication network further comprises a third PE device, the method further comprises:
allocating, by the label management device, a second ESI label to a second ES of the third PE device, wherein the second ESI label is used to uniquely identify a second ESI, the second ESI is used to identify the second ES, the second ES comprises a third link between the third PE and a second CE; and
sending, by the label management device, a third ESI label allocation message to the third PE device, wherein the third ESI label allocation message carries the second ESI label.

9. A label management device used for a communication network, comprising:
an allocating unit (902), configured to allocate a first Ethernet segment identifier, ESI, label to a first Ethernet segment, ES, of a first provider edge, PE, device, wherein the first ESI label is used to uniquely identify a first ESI, the first ESI is used to identify the first ES, the first ES comprises a first link between the first PE and a first customer edge, CE; and
a sending unit (903), configured to send a first ESI label allocation message to the first PE device, wherein the first ESI label allocation message carries the first ESI label.

10. The label management device according to claim 9, wherein,
the sending unit is further configured to send a second ESI label allocation message to the first ES of a second PE device, wherein the second ESI label allocation message carries the first ESI label, the first ES further comprises a second link between the second PE and the first CE.

11. The label management device according to claim 9 or 10, wherein the first ESI label is used by the first PE device to: encapsulate a data packet that is received from the first link and needs to be forwarded, and indicate to the second PE device that the data packet is received by the first link.

12. The label management device according to any one of claims 9 to 11, the label management device further comprises:
a receiving unit, configured to receive an ESI label allocation request message sent by the first PE device, wherein the ESI label allocation request message carries the ESI of the first PE device.

13. The label management device according to claim 12, wherein the ESI label allocation request message further carries an identifier of an Ethernet virtual private network, EVPN, to which the first ES belongs, the first ESI label allocation response message further carries an identifier of the EVPN to which the first ES belongs, and the second ESI label allocation message further carries the identifier of the EVPN to which the first ES belongs.

14. The label management device according to any one of claims 9 to 13, wherein the label management device is a route reflector or a PE device or a centralized controller.

15. The label management device according to any one of claims 9 to 14, wherein the communication network is an Ethernet virtual private network.

16. The label management device according to any one of claims 9 to 15, wherein the communication network further comprises a third PE device,
the allocating unit is further configured to allocate a second ESI label to a second ES of the third PE device, wherein the second ESI label is used to uniquely identify a second ESI, the second ESI is used to identify the second ES, the second ES comprises a third link between the third PE and a second CE; and
the sending unit is further configured to send a third ESI label allocation message to the third PE device, wherein the third ESI label allocation message carries the second ESI label.

17. A communication network, wherein the communication network comprises a label management device, the label management device is the label management device according to any one of claims 9 to 16.

## Patentansprüche

1. Verfahren, das für ein Kommunikationsnetzwerk verwendet wird, umfassend:
Zuweisen (602), durch eine Labelverwaltungsvorrichtung, eines ersten Ethernet-Segmentkennungs- bzw. ESI-Labels zu einem ersten Ethernet-Segment bzw. ES einer ersten Anbieter-Edge- bzw. PE-Vorrichtung, wobei das erste ESI-Label verwendet wird, um eine erste ESI eindeutig zu identifizieren, die erste ESI verwendet wird, um das erste ES zu identifizieren, das erste ES eine erste Verbindung zwischen der ersten PE und einer ersten Kunden-Edge bzw. CE umfasst; und
Senden (603), durch die Labelverwaltungsvorrichtung, einer ersten ESI-Label-Zuweisungsnachricht an die erste PE-Vorrichtung, wobei die erste ESI-Label-Zuweisungsnachricht das erste ESI-Label führt.

2. Verfahren nach Anspruch 1, wobei das Verfahren ferner Folgendes umfasst:
Senden, durch die Labelverwaltungsvorrichtung, einer zweiten ESI-Label-Zuweisungsnachricht an das erste ES einer zweiten PE-Vorrichtung, wobei die zweite ESI-Label-Zuweisungsnachricht das erste ESI-Label führt, das erste ES ferner eine zweite Verbindung zwischen der zweiten PE und der ersten CE umfasst.

3. Verfahren nach Anspruch 1 oder 2, wobei das erste ESI-Label durch die erste PE-Vorrichtung verwendet wird, um: ein Datenpaket, das von der ersten Verbindung empfangen wird und weitergeleitet werden muss, zu verkapseln und der zweiten PE-Vorrichtung anzugeben, dass das Datenpaket durch die erste Verbindung empfangen wird.

4. Verfahren nach einem der Ansprüche 1 bis 3, wobei das Verfahren vor dem Zuweisen, durch eine Labelverwaltungsvorrichtung, eines ersten Ethernet-Segmentkennungs- bzw. ESI-Labels zu einem ersten Ethernet-Segment bzw. ES einer ersten Anbieter-Edge- bzw. PE-Vorrichtung ferner Folgendes umfasst:
Empfangen, durch die Labelverwaltungsvorrichtung, einer durch die erste PE-Vorrichtung gesendeten ESI-Label-Zuweisungsanforderungsnachricht, wobei die ESI-Label-Zuweisungsanforderungsnachricht die ESI der ersten PE-Vorrichtung führt.

5. Verfahren nach Anspruch 4, wobei die ESI-Label-Zuweisungsanforderungsnachricht ferner eine Kennung eines virtuellen privaten Ethernet-Netzwerks bzw. EVPN, zu dem das erste ES gehört, führt, die erste ESI-Label-Zuweisungsantwortnachricht ferner eine Kennung des EVPN, zu dem das erste ES gehört, führt und die zweite ESI-Label-Zuweisungsnachricht ferner die Kennung des EVPN, zu dem das erste ES gehört, führt.

6. Verfahren nach einem der Ansprüche 1 bis 5, wobei die Labelverwaltungsvorrichtung ein Routenreflektor oder eine PE-Vorrichtung oder eine zentralisierte Steuerung ist.

7. Verfahren nach einem der Ansprüche 1 bis 6, wobei das Kommunikationsnetzwerk ein virtuelles privates Ethernet-Netzwerk ist.

8. Verfahren nach einem der Ansprüche 1 bis 7, wobei das Kommunikationsnetzwerk ferner eine dritte PE-Vorrichtung umfasst, wobei das Verfahren ferner Folgendes umfasst:
Zuweisen, durch die Labelverwaltungsvorrichtung, eines zweiten ESI-Labels zu einem zweiten ES der dritten PE-Vorrichtung, wobei das zweite ESI-Label verwendet wird, um eine zweite ESI eindeutig zu identifizieren, die zweite ESI verwendet wird, um das zweite ES zu identifizieren, das zweite ES eine dritte Verbindung zwischen der dritten PE und einer zweiten CE umfasst; und
Senden, durch die Labelverwaltungsvorrichtung, einer dritten ESI-Label-Zuweisungsnachricht an die dritte PE-Vorrichtung, wobei die dritte ESI-Label-Zuweisungsnachricht das zweite ESI-Label führt.

9. Labelverwaltungsvorrichtung, die für ein Kommunikationsnetzwerk verwendet wird, umfassend:
eine Zuweisungseinheit (902), ausgelegt zum Zuweisen eines ersten Ethernet-Segmentkennungs- bzw. ESI-Labels zu einem ersten Ethernet-Segment bzw. ES einer ersten Anbieter-Edge- bzw. PE-Vorrichtung, wobei das erste ESI-Label verwendet wird, um eine erste ESI eindeutig zu identifizieren, die erste ESI verwendet wird, um das erste ES zu identifizieren, das erste ES eine erste Verbindung zwischen der ersten PE und einer ersten Kunden-Edge bzw. CE umfasst; und
eine Sendeeinheit (903), ausgelegt zum Senden einer ersten ESI-Label-Zuweisungsnachricht an die erste PE-Vorrichtung, wobei die erste ESI-Label-Zuweisungsnachricht das erste ESI-Label führt.

10. Labelverwaltungsvorrichtung nach Anspruch 9, wobei
die Sendeeinheit ferner ausgelegt ist zum Senden einer zweiten ESI-Label-Zuweisungsnachricht an das erste ES einer zweiten PE-Vorrichtung, wobei die zweite ESI-Label-Zuweisungsnachricht das erste ESI-Label führt, das erste ES ferner eine zweite Verbindung zwischen der zweiten PE und der ersten CE umfasst.

11. Labelverwaltungsvorrichtung nach Anspruch 9 oder 10, wobei das erste ESI-Label durch die erste PE-Vorrichtung verwendet wird, um: ein Datenpaket, das von der ersten Verbindung empfangen wird und weitergeleitet werden muss, zu verkapseln und der zweiten PE-Vorrichtung anzugeben, dass das Datenpaket durch die erste Verbindung empfangen wird.

12. Labelverwaltungsvorrichtung nach einem der Ansprüche 9 bis 11, wobei die Labelverwaltungsvorrichtung ferner Folgendes umfasst:
eine Empfangseinheit, ausgelegt zum Empfangen einer durch die erste PE-Vorrichtung gesendeten ESI-Label-Zuweisungsanforderungsnachricht, wobei die ESI-Label-Zuweisungsanforderungsnachricht die ESI der ersten PE-Vorrichtung führt.

13. Labelverwaltungsvorrichtung nach Anspruch 12, wobei die ESI-Label-Zuweisungsanforderungsnachricht ferner eine Kennung eines virtuellen privaten Ethernet-Netzwerks bzw. EVPN, zu dem das erste ES gehört, führt, die erste ESI-Label-Zuweisungsantwortnachricht ferner eine Kennung des EVPN, zu dem das erste ES gehört, führt und die zweite ESI-Label-Zuweisungsnachricht ferner die Kennung des EVPN, zu dem das erste ES gehört, führt.

14. Labelverwaltungsvorrichtung nach einem der Ansprüche 9 bis 13, wobei die Labelverwaltungsvorrichtung ein Routenreflektor oder eine PE-Vorrichtung oder eine zentralisierte Steuerung ist.

15. Labelverwaltungsvorrichtung nach einem der Ansprüche 9 bis 14, wobei das Kommunikationsnetzwerk ein virtuelles privates Ethernet-Netzwerk ist.

16. Labelverwaltungsvorrichtung nach einem der Ansprüche 9 bis 15, wobei das Kommunikationsnetzwerk ferner eine dritte PE-Vorrichtung umfasst,
die Zuweisungseinheit ferner ausgelegt ist zum Zuweisen eines zweiten ESI-Labels zu einem zweiten ES der dritten PE-Vorrichtung, wobei das zweite ESI-Label verwendet wird, um eine zweite ESI eindeutig zu identifizieren, die zweite ESI verwendet wird, um das zweite ES zu identifizieren, das zweite ES eine dritte Verbindung zwischen der dritten PE und einer zweiten CE umfasst; und
die Sendeeinheit ferner ausgelegt ist zum Senden einer dritten ESI-Label-Zuweisungsnachricht an die dritte PE-Vorrichtung, wobei die dritte ESI-Label-Zuweisungsnachricht das zweite ESI-Label führt.

17. Kommunikationsnetzwerk, wobei das Kommunikationsnetzwerk eine Labelverwaltungsvorrichtung umfasst, wobei die Labelverwaltungsvorrichtung die Labelverwaltungsvorrichtung nach einem der Ansprüche 9 bis 16 ist.

## Revendications

1. Procédé utilisé pour un réseau de communication, comprenant :
l'allocation (602), par un dispositif de gestion d'étiquettes, d'une première étiquette d'identifiant de segment Ethernet, ESI, à un premier segment Ethernet, ES, d'un premier dispositif côté fournisseur, PE, la première étiquette ESI étant utilisée pour identifier de manière unique un premier ESI, le premier ESI étant utilisé pour identifier le premier ES, le premier ES comprenant une première liaison entre le premier PE et un premier côté client CE ; et
l'envoi (603), par le dispositif de gestion d'étiquettes, d'un premier message d'allocation d'étiquette ESI au premier dispositif PE, le premier message d'allocation d'étiquette ESI transportant la première étiquette ESI.

2. Procédé selon la revendication 1, lequel procédé comprend en outre :
l'envoi, par le dispositif de gestion d'étiquettes, d'un deuxième message d'allocation d'étiquette ESI au premier ES d'un deuxième dispositif PE, le deuxième message d'allocation d'étiquette ESI transportant la première étiquette ESI, le premier ES comprenant en outre une deuxième liaison entre le deuxième PE et le premier CE.

3. Procédé selon la revendication 1 ou 2, dans lequel la première étiquette ESI est utilisée par le premier dispositif PE pour : encapsuler un paquet de données qui est reçu de la première liaison et qui doit être transféré, et indiquer au deuxième dispositif PE que le paquet de données est reçu par la première liaison.

4. Procédé selon l'une quelconque des revendications 1 à 3, dans lequel, avant l'allocation, par un dispositif de gestion d'étiquettes, d'une première étiquette d'identifiant de segment Ethernet, ESI, à un premier segment Ethernet, ES, d'un premier dispositif côté fournisseur, PE, le procédé comprend en outre :
la réception, par le dispositif de gestion d'étiquettes, d'un message de demande d'allocation d'étiquette ESI envoyé par le premier dispositif PE, le message de demande d'allocation d'étiquette ESI transportant l'ESI du premier dispositif PE.

5. Procédé selon la revendication 4, dans lequel le message de demande d'allocation d'étiquette ESI transporte en outre un identifiant d'un réseau privé virtuel Ethernet, EVPN, auquel appartient le premier ES, le premier message de réponse d'allocation d'étiquette ESI transportant en outre un identifiant de l'EVPN auquel appartient le premier ES, et le deuxième message d'allocation d'étiquette ESI transportant en outre l'identifiant de l'EVPN auquel appartient le premier ES.

6. Procédé selon l'une quelconque des revendications 1 à 5, dans lequel le dispositif de gestion d'étiquettes est un réflecteur de route ou un dispositif PE ou un contrôleur centralisé.

7. Procédé selon l'une quelconque des revendications 1 à 6, dans lequel le réseau de communication est un réseau privé virtuel Ethernet.

8. Procédé selon l'une quelconque des revendications 1 à 7, dans lequel le réseau de communication comprend en outre un troisième dispositif PE, le procédé comprenant en outre :
l'allocation, par le dispositif de gestion d'étiquettes, d'une deuxième étiquette ESI à un deuxième ES du troisième dispositif PE, la deuxième étiquette ESI étant utilisée pour identifier de manière unique un deuxième ESI, le deuxième ESI étant utilisé pour identifier le deuxième ES, le deuxième ES comprenant une troisième liaison entre le troisième PE et un deuxième CE ; et
l'envoi, par le dispositif de gestion d'étiquettes, d'un troisième message d'allocation d'étiquette ESI au troisième dispositif PE, le troisième message d'allocation d'étiquette ESI transportant la deuxième étiquette ESI.

9. Dispositif de gestion d'étiquettes utilisé pour un réseau de communication, comprenant :
une unité d'allocation (902),
configurée pour allouer une première étiquette d'identifiant de segment Ethernet, ESI, à un premier segment Ethernet, ES, d'un premier dispositif côté fournisseur, PE, la première étiquette ESI étant utilisée pour identifier de manière unique un premier ESI, le premier ESI étant utilisé pour identifier le premier ES, le premier ES comprenant une première liaison entre le premier PE et un premier côté client CE ; et
une unité d'envoi (903),
configurée pour envoyer un premier message d'allocation d'étiquette ESI au premier dispositif PE, le premier message d'allocation d'étiquette ESI transportant la première étiquette ESI.

10. Dispositif de gestion d'étiquettes selon la revendication 9, dans lequel l'unité d'envoi est en outre configurée pour envoyer un deuxième message d'allocation d'étiquette ESI au premier ES d'un deuxième dispositif PE, le deuxième message d'allocation d'étiquette ESI transportant la première étiquette ESI, le premier ES comprenant en outre une deuxième liaison entre le deuxième PE et le premier CE.

11. Dispositif de gestion d'étiquettes selon la revendication 9 ou 10, dans lequel la première étiquette ESI est utilisée par le premier dispositif PE pour : encapsuler un paquet de données qui est reçu de la première liaison et qui doit être transféré, et indiquer au deuxième dispositif PE que le paquet de données est reçu par la première liaison.

12. Dispositif de gestion d'étiquettes selon l'une quelconque des revendications 9 à 11, le dispositif de gestion d'étiquettes comprenant en outre :
une unité de réception, configurée pour recevoir un message de demande d'allocation d'étiquette ESI envoyé par le premier dispositif PE, le message de demande d'allocation d'étiquette ESI transportant l'ESI du premier dispositif PE.

13. Dispositif de gestion d'étiquettes selon la revendication 12, dans lequel le message de demande d'allocation d'étiquette ESI transporte en outre un identifiant d'un réseau privé virtuel Ethernet, EVPN, auquel appartient le premier ES, le premier message de réponse d'allocation d'étiquette ESI transportant en outre un identifiant de l'EVPN auquel appartient le premier ES, et le deuxième message d'allocation d'étiquette ESI transportant en outre l'identifiant de l'EVPN auquel appartient le premier ES.

14. Dispositif de gestion d'étiquettes selon l'une quelconque des revendications 9 à 13, lequel dispositif de gestion d'étiquettes est un réflecteur de route ou un dispositif PE ou un contrôleur centralisé.

15. Dispositif de gestion d'étiquettes selon l'une quelconque des revendications 9 à 14, dans lequel le réseau de communication est un réseau privé virtuel Ethernet.

16. Dispositif de gestion d'étiquettes selon l'une quelconque des revendications 9 à 15, dans lequel le réseau de communication comprend en outre un troisième dispositif PE, l'unité d'allocation étant en outre configurée pour allouer une deuxième étiquette ESI à un deuxième ES du troisième dispositif PE, la deuxième étiquette ESI étant utilisée pour identifier de manière unique un deuxième ESI, le deuxième ESI étant utilisé pour identifier le deuxième ES, le deuxième ES comprenant une troisième liaison entre le troisième PE et un deuxième CE ; et
l'unité d'envoi étant en outre configurée pour envoyer un troisième message d'allocation d'étiquette ESI au troisième dispositif PE, le troisième message d'allocation d'étiquette ESI transportant la deuxième étiquette ESI.

17. Réseau de communication, lequel réseau de communication comprend un dispositif de gestion d'étiquettes, le dispositif de gestion d'étiquettes étant le dispositif de gestion d'étiquettes selon l'une quelconque des revendications 9 à 16.
